(19) Europäisches Patentamt
European Patent Office
Office européen des brevets

(11) EP 4 328 021 A1

(12) **EUROPEAN PATENT APPLICATION**
published in accordance with Art. 153(4) EPC

(43) Date of publication:
**28.02.2024 Bulletin 2024/09**

(21) Application number: **22791472.8**

(22) Date of filing: **24.03.2022**

(51) International Patent Classification (IPC):
***B32B 27/00*** (2006.01) ***C09D 183/04*** (2006.01)
***C09J 7/38*** (2018.01) ***C09J 7/40*** (2018.01)

(52) Cooperative Patent Classification (CPC):
**B32B 27/00; C09D 183/04; C09J 7/38; C09J 7/40**

(86) International application number:
**PCT/JP2022/014096**

(87) International publication number:
**WO 2022/224696 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2021 JP 2021071422**

(71) Applicant: **Mitsubishi Polyester Film GmbH**
**65203 Wiesbaden (DE)**

(72) Inventor: **NAKAZAWA, Yusuke**
**Tokyo 100-8251 (JP)**

(74) Representative: **Schweitzer, Klaus**
**Plate Schweitzer Zounek**
**Patentanwälte**
**Rheingaustrasse 196**
**65203 Wiesbaden (DE)**

# (54) RELEASE FILM AND FILM LAMINATE

(57) The invention is a release film for pressure-sensitive adhesive layer protection including a release layer on one surface of a substrate film (B), wherein the surface roughness (arithmetical mean height; Sa) of the surface of the release layer is 200 nm or more, the maximum peak height (Sp) of the surface of the release layer is 300 nm or more, and the distribution curve representing the relationship between the projection height (X) and the number of projections (Y) on the surface of the release layer satisfies the following expression (1). $-(\log Y2-\log Y1)/(X2-X1) \geq 1.0$ (1), wherein Y1 and Y2 each represent the number of projections (number/$mm^2$) on the surface of the release layer when X1 and X2, the heights of the projections on the surface of the release layer, are X1 = 0.98 μm and X2 = 1.98 μm, respectively. The invention provides a pressure-sensitive adhesive layer-having release film and a film laminate, which leave substantially no moisture or residual bubbles when pasted on adherends with water and can be readily cut into single sheets.

EP 4 328 021 A1

## Description

### Technical Field

The present invention relates to a release film and a film laminate.

### Background Art

Heretofore, polyester films, especially polyethylene terephthalate films and polyethylene naphthalate films have excellent mechanical properties, heat resistance and chemical resistance, and are therefore used for various applications such as packaging, electronic components, electrical insulation, metal lamination, optical applications for display constituent components such as foldable displays, bendable displays and rollable displays, as well as for touch panels, antireflection applications, and glass scattering prevention applications.

Polyester films used in such wide applications can be used for pressure-sensitive adhesive layer protection for glass and steel plates mainly used outdoors, such as buildings, automobiles, trains and airplanes.

In sticking a pressure-sensitive adhesive layer-having substrate film to adherends such as glass or car bodies, or after pasting it thereto, air or moisture may remain in the interface between the pressure-sensitive adhesive layer and the adherend to form air bubbles of a few hundred microns size that can be visually confirmed, thereby often causing outward appearance failure or reduction in adhesive force owing to moisture residence, as the case may be.

Consequently, as a measure for this, at present, occurrence of the trouble is suppressed by so-called "water pasting" such that water or a surfactant-containing aqueous solution is previously sprayed over the surface of a pressure-sensitive adhesive layer and the surface is then processed for water escape or bubbles escape treatment by the use of a squeegee.

Under the situation, for the purpose of forming fine grooves on the adhesive surface for effusing the fluid on the adhesion interface, there is proposed a release liner having on one surface thereof a fine embossed pattern formed of a large number of linear raised parts connecting with each other (PTL 1). There is also proposed an adhesive sheet having excellent air escape performance capable of easily removing dead air space to be formed in sticking the sheet to an adhered, and having good adhesiveness, the adhesive sheet has a resin layer on a substrate or a release agent, the surface of the resin layer on the opposite side to the substrate or the release agent is adhesive, and irregularly-shaped depressions are formed on the surface of the resin layer (PTL 2). Further, there is proposed a coating film-protective film for automobiles, having a pressure-sensitive re-peelable pressure-sensitive adhesive layer on the car body surface side, having a plastic film on the outer side, and having a center line average roughness of the surface (Ra) of 0.1 to 100 μm (PTL 3).

### Citation List

### Patent Literature

PTL 1: JP 2006-70273 A
PTL 2: WO2015/152352
PTL 3: JP 7-89468 A

### Summary of Invention

### Technical Problem

In the above-mentioned "water pasting" method, the treatment of water escape or bubbles escape by the use of a squeegee needs a skilled technique, and recently, with the increase in the market for PPF (paint protection films) for wrapping automobiles, tracks, trains or airplanes with a printed adhesive film, or for automobile paint protection, it has become further difficult to uniformly stick a large-area adhesive film having a size of 1 $m^2$ or more to adherends.

The techniques disclosed in PTLs 1 to 3 are insufficient in point of water escape or bubbles escape failure.

The present invention has been made in consideration of the above-mentioned situation, and its object is to newly provide a release film for pressure-sensitive adhesive layer protection, which, in use for pressure-sensitive adhesive layer protection, leaves substantially no moisture or residual bubbles when pasted on adherends and can be readily cut into sheets, and a film laminate with the film.

Solution to Problem

The present inventor has made assiduous studies in consideration of the above-mentioned situation and, as a result, has found that a release film having a specific constitution can easily solve the above-mentioned problem, and have completed the present invention.
Specifically, the gist of the present invention is to provide the following [1] to [23].

[1] A release film for pressure-sensitive adhesive layer protection including a release layer on one surface of a substrate film (B), wherein the surface roughness (arithmetical mean height; Sa) of the surface of the release layer is 200 nm or more, the maximum peak height (Sp) of the surface of the release layer is 300 nm or more, and the distribution curve representing the relationship between the projection height (X) and the number of projections (Y) on the surface of the release layer satisfies the following expression (1):

$$-(\log Y2-\log Y1)/(X2-X1) \geq 1.0 \qquad (1)$$

wherein Y1 and Y2 each represent the number of projections (number/$mm^2$) on the surface of the release layer when X1 and X2, the heights of the projections on the surface of the release layer, are X1 = 0.98 μm and X2 = 1.98 μm, respectively.
[2] The release film for pressure-sensitive adhesive layer protection according to [1], wherein the substrate film (B) contains particles having an average particle size of 1 to 10 μm in an amount of 0.1 to 10% by mass.
[3] The release film for pressure-sensitive adhesive layer protection according to [1], wherein the substrate film (B) has a multilayer structure, and the surface layer of the substrate film (B) on the side kept in contact with the release layer contains the particles having an average particle size of 1 to 10 μm in an amount of 0.1 to 10% by mass.
[4] The release film for pressure-sensitive adhesive layer protection according to any of the above [1] to [3], wherein the number of the projections having a projection height of 0.98 μm represented by X1 is 1000/$mm^2$ or more.
[5] The release film for pressure-sensitive adhesive layer protection according to any of the above [1] to [4], wherein the number of the projections having a projection height of 1.98 μm represented by X2 is 3/$mm^2$ or more.
[6] The release film for pressure-sensitive adhesive layer protection according to any of the above [1] to [5], wherein the release layer contains a curable silicone resin.
[7] The release film for pressure-sensitive adhesive layer protection according to the above [6], wherein the release layer further contains a surfactant.
[8] The release film for pressure-sensitive adhesive layer protection according to any of the above [1] to [7], wherein the substrate film (B) is a polyester film.
[9] The release film for pressure-sensitive adhesive layer protection according to the above [8], wherein the birefringence ($\Delta n \times 10^3$) of the polyester film is 25 or less.
[10] The release film for pressure-sensitive adhesive layer protection according to the above [8] or [9], wherein the MOR value of the polyester film is 1.5 or less.
[11] The release film for pressure-sensitive adhesive layer protection according to any of the above [1] to [10], having an air escape index of 2000 seconds or less.
[12] The release film for pressure-sensitive adhesive layer protection according to any of the above [8] to [11], the polyester film contains recycled materials in an amount of 50% by mass or more.
[13] A film laminate including, via a pressure-sensitive adhesive layer therebetween, a substrate film (A) on the release layer of the release film of any of the above [1] to [12].
[14] The film laminate according to the above [13], wherein the substrate film (A) is a polyurethane film.
[15] The film laminate according to the above [13], wherein the substrate film (A) is a print layer-having resin film.
[16] The film laminate according to any of the above [13] to [15], wherein the pressure-sensitive adhesive layer is any of an acrylic pressure-sensitive adhesive layer, an urethane-based pressure-sensitive adhesive layer or a silicone-based pressure-sensitive adhesive layer.
[17] The film laminate according to any of the above [13] to [16], wherein the surface roughness (arithmetical mean height; Sa) of the surface of the pressure-sensitive adhesive layer after peeling the release film is 200 nm or more.
[18] The film laminate according to any of the above [13] to [17], wherein the elastic modulus at 25°C of the pressure-sensitive adhesive layer is 20 MPa or more.
[19] A method for producing the release film for pressure-sensitive adhesive layer protection of any of the above [1] to [12], wherein the substrate film (B) is a multilayer film having a polyester layer containing particles in only the surface layer, the polyester layer adjacent to the release layer contains particles having an average particle size of 1.0 to 4.5 μm, the amount of the particles added is 1 to 10% by mass, and the difference between the longitudinal draw ratio and the lateral draw ratio is 0.2 times or less.

[20] The method for producing the release film for pressure-sensitive adhesive layer protection according to the above [19], wherein the longitudinal draw ratio is 3.0 to 4.5 times, and the lateral draw ratio is 3.0 to 5.0 times.
[21] The film laminate according to any of the above [13] to [18], which is in the form of a sheet having at least one side of 1000 mm or more.
[22] The release film for pressure-sensitive adhesive layer protection according to any of the above [1] to [12], which is for automobile coating protection or wrapping film.
[23] The film laminate according to any of the above [13] to [18] and [21], which is for automobile coating protection or wrapping film.

Advantageous Effects of Invention

According to the present invention, there can be provided a pressure-sensitive adhesive layer-having release film and a film laminate, which leave substantially no moisture or residual bubbles when pasted on an adherend with water, and which can be easily cut into single sheets, and the industrial applicability of the invention is high. In particular, the invention is favorable for automobile coating or for wrapping films.

Brief Description of Drawings

Fig. 1 is a bird’s dye view of the surface of a release layer ("release face") of a release film (sample film) obtained in Example 1.
Fig. 2 is a bird’s dye view of the surface of a release layer ("release face") of a release film (sample film) obtained in Example 2.
Fig. 3 is a bird’s dye view of the surface of a release layer ("release face") of a release film (sample film) obtained in Example 3.
Fig. 4 is a bird’s dye view of the surface of a release layer ("release face") of a release film (sample film) obtained in Comparative Example 1.
Fig. 5 is a bird’s dye view of the surface of a pressure-sensitive adhesive layer, after the release film (sample film) obtained in Example 1 was pasted to and peeled from the surface of the pressure-sensitive adhesive layer.
Fig. 6 is a bird’s dye view of the surface of a pressure-sensitive adhesive layer, after the release film (sample film) obtained in Example 2 was pasted to and peeled from the surface of the pressure-sensitive adhesive layer.
Fig. 7 is a bird’s dye view of the surface of a pressure-sensitive adhesive layer, after the release film (sample film) obtained in Example 3 was pasted to and peeled from the surface of the pressure-sensitive adhesive layer.
Fig. 8 is a bird’s dye view of the surface of a pressure-sensitive adhesive layer, after the release film (sample film) obtained in Comparative Example 1 was pasted to and peeled from the surface of the pressure-sensitive adhesive layer.

Description of Embodiments

The release film for pressure-sensitive adhesive layer protection of the present invention (hereinafter this may be simply referred to as "release film") has a release layer on one surface of a substrate film (B). Hereinunder the constituent requirements are described in detail.

[Substrate Film (B)]

As the substrate film (B), a resin film is exemplified.
For example, the resin film includes those produced by forming a polymer such as polyethylene, polypropylene, cycloolefin polymer (COP), polyester, polystyrene, acrylic resin, polycarbonate, polyurethane, triacetyl cellulose (TAC), polyvinyl chloride, polyether sulfone, polyamide, polyimide or polyamide imide, into films. Others that can be formed into films are also usable here, including those produced by mixing these materials (polymer blends) or those produced by complexing them (copolymers).
Among the above-exemplified films, polyester films are especially preferred as excellent in physical properties such as heat resistance, planarity, optical characteristics and strength. Polyester films can have a single-layer configuration or a multilayer configuration, and can have a multilayer configuration of 4 layers or more, in addition to 2 layers or 3 layers not overstepping the gist of the present invention, and the layer configuration thereof is not specifically limited. Regarding the multilayer configuration of 2 layers or more, preferably, each constituent layer is specifically characterized to achieve multifunction.

The polyester for use for the polyester film is preferably one obtained by polycondensation of an aromatic dicarboxylic acid and an aliphatic glycol. The aromatic dicarboxylic acid includes terephthalic acid, isophthalic acid, and 2,6-naphthalenedicarboxylic acid; and the aliphatic glycol includes ethylene glycol, diethylene glycol, trimethylene glycol, tetramethylene glycol, neopentyl glycol, and 1,4-cyclohexanedimethanol.

Typical examples of the polyester include polyethylene terephthalate (PET), polyethylene-2,6-naphthalene dicarboxylate (PEN), and polybutylene terephthalate. The polyester can be a homopolymer that is not copolymerized, or can be a copolymerized polyester in which 20 mol% or less of the dicarboxylic acid component is any other dicarboxylic acid component than the main component, and/or 20 mol% or less of the diol component is any other diol component than the main component. Mixtures thereof are also usable here.

The polyester can be obtained in a conventionally-known method, for example, in a method of directly obtaining a low-polymerization-degree polyester by reaction of a dicarboxylic acid and a diol, or a method of reacting a lower alkyl ester of a dicarboxylic acid and a diol with a conventionally-known interesterification catalyst, followed by polymerization in the presence of a polymerization catalyst. As the polymerization catalyst, a known catalyst, such as an antimony compound, a germanium compound or a titanium compound, can be used, but preferably, the amount of the antimony compound is zero or is 100 ppm or less as antimony, since films with reduced dullness can be obtained.

In the case where a titanium compound is used as a catalyst, the metal amount to remain in the film is small, and therefore the compound is preferred from the viewpoint of film transparency and foreign matter generation reduction.

Preferably, particles are blended in the substrate film (B) to the extent not impairing transparency, and in order to impart a desired surface roughness (Sa) and a maximum peak height (Sp) to the surface of the release layer to be mentioned hereinunder, and further in order that a projection height (X) and the number of projections (Y) on the surface of the release layer can satisfy the equation (1) to be mentioned below. The kind of the particles to be blended is not specifically limited so far as the particles can impart the above-mentioned characteristics, and specific examples thereof include inorganic particles such as silica, calcium carbonate, magnesium carbonate, barium carbonate, calcium sulfate, calcium phosphate, magnesium phosphate, kaolin, aluminum oxide, and titanium oxide, and organic particles such as acrylic resin, styrene resin, urea resin, phenol resin, epoxy resin, and benzoguanamine resin. Further, during the process of polyester production, a part of a metal compound such as a catalyst can be precipitated and finely dispersed, and the resultant precipitate particles can also be used. Among these, silica particles and calcium carbonate particles are preferred especially from the viewpoint that even a small amount thereof can readily exhibit the effect.

The shape of the particles to be used is not also specifically limited. Any of spherical, bulky, rod-like or flattened particles are usable. The hardness, the specific gravity, and the color are not also specifically limited. As needed, two or more kinds of these series of particles can be used as combined.

The average particle size of the particles to be used is, for bettering the water escape or bubbles escape effect, preferably within a range of 1 to 10 μm, more preferably within a range of 1 to 8 μm, even more preferably within a range of 2 to 6 μm, especially more preferably within a range of 2 to 5 μm.

The content of the particles in the polyester is, in the case of a single-layer film, preferably within a range of 0.1 to 10% by mass relative to all the polyesters constituting the film. When the content of the particles is 0.1% by mass or more, the water escape and bubbles escape effect can be sufficient, and when the content is 10% by mass or less, the transparency of the substrate film can be ensured. From these viewpoints, the content of the particles in the substrate film (B) is more preferably within a range of 1 to 10% by mass, even more preferably 2 to 8% by mass, especially preferably 3 to 6% by mass.

In the case of a multilayer film, a predetermined content of particles having a predetermined particle size can be contained in the surface layer, and for example, a polyester film having a polyester layer that contains particles only in the surface layer thereof can have sufficient recesses and projections and can evade transparency reduction owing to the particles. Specifically, in the release film for pressure-sensitive adhesive layer protection of the present invention, the content of the particles in the polyester that constitutes the surface layer to be kept in contact with the release layer of the polyester film is, from the viewpoint of a sufficient water escape or bubbles escape effect and the substrate film transparency, preferably within a range of 0.1 to 10% by mass, more preferably 1 to 10% by mass, even more preferably 2 to 8% by mass, especially more preferably 3 to 6% by mass. The average particle size of the particles is the same as that of the particles in the case of a single layer mentioned hereinabove.

The method of adding the particles to the polyester is not specifically limited, and a conventionally-known method is employable. For example, the particles can be added in any stage in polyester production, but preferably, the particles can be added in the esterification stage or after interesterification reaction, and thereafter polycondensation reaction can be performed. Also employable is a method of blending a slurry of particles dispersed in ethylene glycol or water and a polyester material, using a vented kneading extruder, or a method of blending dried particles and a polyester material, using a kneading extruder.

The birefringence ($\Delta n \times 10^3$) of the polyester film in the present invention is preferably 25 or less. 25 or less is advantageous in point of cutting the film. From the viewpoint, the birefringence ($\Delta n \times 10^3$) of the polyester film is more preferably 20 or less, even more preferably 15 or less. The lower limit of the birefringence ($\Delta n \times 10^3$) is not specifically

limited, and is generally 0.7 or more. The birefringence ($\Delta n \times 10^3$) is a value determined according to the method described in the section of Examples.

In addition to the above-mentioned particles, as needed, an antioxidant, a heat stabilizer, a lubricant, an antistatic agent, a fluorescent whitener, a dye and a pigment that are heretofore known can be added to the polyester film. Depending on the object of preventing degradation of protective film substrates by UV rays, protected glass or coating films for bodies such as steel plates, a UV absorbent, especially a benzoxazinone-type UV absorbent can be added to the film.

The thickness of the polyester film (substrate film (B)) is, from the viewpoint of using as a release film, preferably within a range of 25 to 350 μm, more preferably 38 to 250 μm, even more preferably 38 to 125 μm, and especially more preferably among them within a range of 38 to 100 μm.

The polyester film can be made to have a laminate structure, using various conventionally-known methods such as a co-extrusion method. At that time, the thickness of the outermost layer is, as the thickness of one side alone thereof, preferably 2 μm or more, more preferably 3 μm or more, and is preferably 1/8 or less of the total thickness. Falling within the range, there can be produced a polyester film having a polyester layer that contains particles only in the surface layer thereof as mentioned above, and sufficient recesses and projections can be formed on the surface layer while evading transparency reduction owing to the particles.

In the release film of the present invention, the water droplet contact angle on the surface of the polyester film with a release layer formed thereon (the surface of the release layer) is preferably 70 degrees or more, more preferably 80 degrees or more, even more preferably 90 degrees or more, especially more preferably 100 degrees or more. By making the water droplet contact angle greater than or equal to the above angle, the water repellence of the release film increases, water droplet marks or dirt hardly remains on the release film, and the release film can readily maintain transparency.

The production method for the polyester film in the present invention is described specifically hereinunder, but so far as the gist of the present invention is satisfied, the present invention is not limited to the following exemplifications.

In general, first, polyester chips dried in a known method or undried are fed into a melt extruder and melted therein by heating up to a temperature not lower than the melting point of the individual polymers. Next, the molten polymer is extruded out through a die, and rapidly cooled and solidified on a rotary cooling drum so that the temperature thereof could be a glass transition temperature or lower, thereby producing a substantially amorphous unoriented sheet. In that case, for improving the planarity of the sheet, the adhesiveness between the sheet and the rotary cooling drum is preferably increased, and in the present invention, a static electricity applying adhesion method and/or a liquid coating adhesion method are preferably employed.

The sheet obtained in the manner as above is preferably stretched in the biaxial direction to be a film, from the viewpoint of the strength of the resultant film. The stretching condition is described specifically. It is preferable that the unstretched sheet is stretched preferably in the longitudinal direction at 70 to 145°C by 2.0 to 4.5 times to be a longitudinal monoaxially stretched film, and then stretched in the lateral direction at 90 to 160°C by 3.0 to 6.5 times to be a biaxially-stretched film, and this is subjected to thermal treatment (heat fixation) at 210 to 260°C for 10 to 600 seconds. In the highest temperature zone of heat treatment and/or in the cooling zone at the outlet of heat treatment, the film is preferably relaxed by 1 to 10% in the longitudinal direction and/or in the lateral direction.

Especially in the case where the thermal shrinkage of the film is desired to be suppressed low for its use, the above-mentioned thermal treatment temperature is preferably 215 to 250°C, more preferably 220 to 245°C, even more preferably 230 to 245°C. Falling within the temperature range, the thermal shrinkage can be suppressed as low as possible.

From the viewpoint of forming sheets having a stable recess-projection pattern irrespective of the position at which the polyester film of the present invention in a roll form is cut into sheets, the molecular orientation ratio (hereinafter referred to as "MOR" value) is preferably 1.5 or less, more preferably 1.3 or less, and especially more preferably 1.1 or less.

Satisfying the range, a sheet-form polyester film having a well-reproducible recess-projection pattern can be collected irrespective of the sheet-collecting position.

The release film of the present invention is characterized in that, in view of the use thereof, the film area is large in pasting on adherends. Consequently, when an adhesive sheet, on which the recess-projection pattern of the surface of the release film has been transferred, is pasted on an adherend, and when there exists a difference in the bubbles escape degree among the collecting positions of the sheet to be used, there is a concern that the processability of the sheet may worsen.

A specific method for controlling the MOR value to fall within the range is, as one example, such that, in the film stretching condition, the difference between the draw ratio in the longitudinal direction and the draw ratio in the lateral direction is set to be 0.2 times or less, preferably 0.1 times or less, and especially preferably the two are set to be the same draw ratio.

On the other hand, in the case of considering the productivity of roll products, in general, the draw ratio in the lateral direction tends to be set larger than the draw ratio in the longitudinal direction. In the present invention, in general,

it is preferable that the stretching condition is set in the direction opposite to the direction in which the film productivity increases (longitudinal draw ratio < lateral draw ratio), and daringly it is preferable that the difference between the longitudinal draw ratio and the lateral draw ratio is controlled to fall within a certain definite range.

For example, in the case where a 1-meter-wide roll product is collected from a 3-meter-wide master roll, then a 1 m × 3 m sheet-form release film is cut out of each roll, and the lateral draw ratio is set larger than the longitudinal draw ratio, it is presumed that, probably owing to the influence of the stretching orientation on the release film at both ends, the distance between the projections on the film surface tends to further broaden and the projection height tends to lower. It is presumed that tendency is the same in all the longitudinal (lengthwise) direction of the roll products at both ends. A case where a sheet-like release film collected from a roll at both ends is used and pasted on a release sheet is compared with a case where a sheet-like release film collected from the roll at the central position is used, and there is a concern that a time difference may occur in bubbles escape from the resultant adhesive sheets.

The present invention is to propose solutions to the above-mentioned concerns, and to propose a release film capable of attaining a stable bubbles escape effect irrespective of the collecting position for sheet-form release films.

Adherends for an adhesive sheet pasted with a release film are presumed to include automobiles, tracks, trains and airplanes, and use thereof in a large area is presupposed. Consequently, the sheet size of the release film is, as at least one side thereof, preferably 1000 mm or more and is more preferably 1000 mm or more as both sides thereof. In particular, a case where both sides are 1000 mm or more and the area is 1 $m^2$ or more has good reproducibility for recess-projection patterns and exhibits a stable bubbles escape effect.

Preferably, the polyester film in the present invention contains recycled materials in an amount of 50% by mass or more. In particular, in the case where the polyester film has, for example, a three-layer configuration, it is preferable that the interlayer contains recycled materials in an amount of 50% by mass or more. More preferably, the content is 70% by mass or more, even more preferably 80% by mass or more. The recycled materials to be used is not specifically limited so far as they do not interfere with the subject matter of the present invention.

The recycled materials can be selvage parts to be cut in film production, or can also be those obtained by once grinding a produced polyester film or a release layer-having polyester film, and then forming it into flakes or chips.

In particular, the release film of the present invention is favorable for pressure-sensitive adhesive layer protection for glass and steel plates for outdoor use, for example, for automobiles, signboards, solar energy generation, road-related members such as traffic signs and sound barriers.

[Release Layer]

The release film of the present invention has a release layer on one surface of the substrate film (B). The role of the release layer is not only attaining the effect of protecting various subjects to be protected and preventing contamination of protective films but also making a contribution toward improving the handleability of the polyester film in the present invention. For example, when the film of the present invention is piled up as sheets or when it is rolled up, the release layer exhibits an effect of antiblocking with the back side of the film or providing easy peeling, or bettering film slidability to facilitate film production, or bettering film handleability or bettering processability of the pressure-sensitive adhesive layer to the film.

The thickness of the release layer is not specifically limited so far as it falls within a range capable of exhibiting the effects of the present invention, but is preferably within a range of 0.001 to 5 μm, more preferably 0.01 to 3 μm, even more preferably 0.1 to 2 μm. When the thickness of the release layer falls within the above range, the film can secure a good appearance, water repellency and releasability (antiblocking with pressure-sensitive adhesive layer)

<Release Agent>

For forming the release layer, it is necessary to contain a release agent. The release agent is not specifically limited, and any conventionally-known release agent can be used here. Examples thereof include long-chain alkyl group-containing compounds, fluorine compounds, silicone compounds and waxes. Among these, from the viewpoint of little contamination in the meaning of transfer to the other end to be protected and from the viewpoint of excellent water repellency, preferred are long-chain alkyl compounds and fluorine compounds, and especially in the point of bettering the releasability from pressure-sensitive adhesive layer, preferred are silicone compounds. One alone or plural kinds of these release agents can be used either singly or as combined.

(Long-Chain Alkyl Group-Containing Compound)

The long-chain alkyl group-containing compound is a compound having a linear or branched alkyl group with a carbon number of generally 6 or more, preferably 8 or more, more preferably 12 or more. The upper limit of the carbon number is not specifically limited, and is, for example, 30. Examples of the alkyl group include a hexyl group, an octyl

group, a decyl group, a lauryl group, an octadecyl group and a behenyl group. Examples of the alkyl group-having compound include various long-chain alkyl group-containing polymer compounds, long-chain alkyl group-containing amine compounds, long-chain alkyl group-containing ether compounds, and long-chain alkyl group-containing quaternary ammonium salts. In consideration of heat resistance and contamination resistance, polymer compounds are preferred. From the viewpoint of effectively attaining releasability, more preferred are polymer compounds having a long-chain alkyl group in the side chain.

The polymer compound having a long-chain alkyl group in the side chain can be obtained by reacting a polymer having a reactive group and a compound having an alkyl group capable of reacting with the reactive group. Examples of the reactive group include a hydroxy group, an amino group, a carboxy group and an acid anhydride. Examples of the compound having any of these reactive groups include a polyvinyl alcohol, a polyethylene imine, a polyethylene amine, a reactive group-containing polyester resin, and a reactive group-containing poly(meth)acrylic resin. Among these, in consideration of releasability and handleability, a polyvinyl alcohol is preferred.

Examples of the compound having an alkyl group capable of reacting with the reactive group include a long-chain alkyl group-containing isocyanate such as hexyl isocyanate, octyl isocyanate, decyl isocyanate, lauryl isocyanate, octadecyl isocyanate, and behenyl isocyanate; a long-chain alkyl group-containing acid chloride such as hexyl chloride, octyl chloride, decyl chloride, lauryl chloride, octadecyl chloride, and behenyl chloride; a long-chain alkyl group-containing amine, and a long-chain alkyl group-containing alcohol. Among these, in consideration of releasability and handleability, preferred is a long-chain alkyl group-containing isocyanate, and especially preferred is octadecyl isocyanate.

The polymer compound having a long-chain alkyl group in the side chain can be obtained by copolymerization of a polymer of a long-chain alkyl (meth)acrylate or a long-chain alkyl (meth)acrylate and any other vinyl group-containing monomer. Examples of the long-chain alkyl (meth)acrylate include hexyl (meth)acrylate, octyl (meth)acrylate, decyl (meth)acrylate, lauryl (meth)acrylate, octadecyl (meth)acrylate, and behenyl (meth)acrylate.

(Fluorine Compound)

The fluorine compound is a compound containing a fluorine atom in the compound. In point of the coating appearance in in-line coating, an organic fluorine compound is favorably used, and examples thereof include a perfluoroalkyl group-containing compound, a polymer of a fluorine atom-containing olefin compound, and an aromatic fluorine compound such as fluorobenzene. From the viewpoint of releasability, preferred is a perfluoroalkyl group-having compound. As the fluorine compound, also usable here is a compound containing a long-chain alkyl compound as mentioned below.

Examples of the perfluoroalkyl group-having compound include a perfluoroalkyl group-containing (meth)acrylate and a polymer thereof, such as perfluoroalkyl (meth)acrylate, perfluoroalkylmethyl (meth)acrylate, 2-perfluoroalkylethyl (meth)acrylate, 3-perfluoroalkylpropyl (meth)acrylate, 3-perfluoroalkyl-1-methylpropyl (meth)acrylate, and 3-perfluoroalkyl-2-propenyl (meth)acrylate; and a perfluoroalkyl group-containing vinyl ether and a polymer thereof, such as perfluoroalkyl methyl vinyl ether, 2-perfluoroalkyl ethyl vinyl ether, 3-perfluoropropyl vinyl ether, 3-perfluoroalkyl-1-methylpropyl vinyl ether, and 3-perfluoroalkyl-2-propenyl vinyl ether. In consideration of heat resistance and contamination resistance, polymers are preferred. The polymer can be a polymer of a single compound alone or a polymer of plural compounds. From the viewpoint of releasability, the carbon number of the perfluoroalkyl group is preferably 3 to 11. A polymer with a compound containing a long-chain alkyl group to be mentioned below is also usable here. From the viewpoint of adhesiveness to substrate, also preferred is a polymer with vinyl chloride.

(Silicone Compound)

The silicone compound is a compound having a silicone structure in the molecule. Examples thereof include an alkylsilicone such as dimethylsilicone and diethylsilicone; and phenyl group-having phenylsilicone and methylphenylsilicone. Silicones having various functional groups are also usable. Examples of the functional group include an ether group, a hydroxy group, an amino group, an epoxy group, a carboxylic acid group, a halogen group such as fluorine, a perfluoroalkyl group, and hydrocarbon groups such as various alkyl groups and various aromatic groups. As other functional groups, vinyl group-having silicones and hydrogensilicones with a hydrogen atom directly bonding to a silicon atom are general, and the two can be combined to be addition-type (vinyl group and hydrogensilane addition reaction type) silicones for use herein.

As silicone compounds, also usable are modified silicones such as acryl-graft silicone, silicone-graft acryl, amino-modified silicone and perfluoroalkyl-modified silicone. In consideration of heat resistance and contamination resistance, curable silicone resin is preferably used. Regarding the kind of curable resins, usable here is any type of curable resins such as addition-curable or active energy ray-curable resins. Curable silicone resins will be described in detail hereinunder.

<Polyether Group-Containing Silicone Compound>

In a preferred embodiment of using a silicone compound, from the viewpoint of antioffset performance, good dispersibility in a water-base solvent and high applicability to in-line coating, a polyether group-containing silicone compound is preferred. A polyether group can be at the end or in the side chain of silicone, or can be in the main chain thereof. From the viewpoint of dispersibility in a water-base solvent, preferably, the group is at the end or in the side chain.

The polyether group for use herein can have a conventionally-known structure. From the viewpoint of dispersibility in a water-base solvent, an aliphatic polyether group is preferred to an aromatic polyether group. Among the aliphatic polyether group, an alkyl polyether group is preferred. From the viewpoint of synthesis by steric hindrance, a linear alkyl polyether group is preferred to a branched alkyl polyether group, and above all, a polyether group with a linear alkyl having 8 or less carbon atoms is preferred. Further, in the case where the developing solvent is water, in consideration of dispersibility in water, preferred is a polyethylene glycol group or a polypropylene glycol group, and especially most preferred is a polyethylene glycol group.

The number of the ether bonds in the polyether group is, from the viewpoint of improving the dispersibility in a water-base solvent and the durability of the release layer, generally within a range of 1 to 30, preferably within a range of 2 to 20, more preferably within a range of 3 to 15. When the number of the ether bonds is small, dispersibility worsens, but contrary thereto, when the number is too many, durability and releasability worsen.

In the case where a polyether group is in the side chain or at the end of a silicone, the end of the polyether group is not specifically limited, for which various functional groups are usable, including a hydroxy group, an amino group, a thiol group, a hydrocarbon group such as an alkyl group or a phenyl group, or a carboxylic acid group, a sulfonic acid group, an aldehyde group and an acetal group. Among them, in consideration of dispersibility in water and crosslinking performance for improving the strength of the release layer, preferred are a hydroxy group, an amino group, a carboxylic acid group and a sulfonic acid group, and especially a hydroxy group is the best.

The content of the polyether group in the polyether group-containing silicone is, as a molar ratio based on the siloxane bond in the silicone referred to as 1, preferably within a range of 0.001 to 0.30, more preferably within a range of 0.01 to 0.20, even more preferably within a range of 0.03 to 0.15, and especially more preferably within a range of 0.05 to 0.12. Falling within the range, good dispersibility in water, and good durability and releasability of the release layer can be secured.

The molecular weight of the polyether group-containing silicone is, in consideration of dispersibility in a water-base solvent, preferably not so large, but is, in consideration of durability and releasability of the release layer, preferably large. Balance of characteristics between the two is required, and the number-average molecular weight of the silicone is preferably within a range of 1000 to 100000, more preferably within a range of 3000 to 30000, even more preferably within a range of 5000 to 10000.

In consideration of temporal change and releasability of the release layer, and also contamination thereof in various operation steps, the amount of the low-molecular silicone component (having a number-average molecular weight of 500 or less) is preferably as small as possible, and the amount thereof is, as a ratio to the entire silicone compound, preferably within a range of 15% by mass or less, more preferably 10% by mass or less, even more preferably 5% by mass or less. In the case where a condensation-type silicone is used, and when the vinyl group bonding to silicon (vinylsilanes) and the hydrogen group bonding thereto (hydrogensilane) remain unreacted in the release layer in the case, these unreacted groups may be a cause of temporal change of various properties, and therefore the content of the functional group in the silicone is preferably 0.1 mol% or less, and more preferably, the silicone does not contain such a functional group.

<Surfactant>

The polyether group-containing silicone is difficult to apply by itself and is therefore preferably used in the form of a dispersion in water. For forming the dispersion, various conventionally-known surfactants can be used, and examples thereof include an anionic surfactant, a nonionic surfactant, a cationic surfactant and an ampholytic surfactant. Among these, in consideration of the dispersibility of the polyether group-containing silicone and the compatibility thereof with any other polymer than the polyether group-containing silicone to be used in forming the release layer, preferred are an anionic surfactant and a nonionic surfactant. In place of these surfactants, a fluorine compound is also usable.

The anionic surfactant includes sulfonate-type or sulfate-type surfactants such as sodium dodecylbenzenesulfonate, sodium alkylsulfonate, sodium alkylnaphthalenesulfonate, sodium dialkylsulfosuccinate, sodium polyoxyethylene alkyl ether sulfate, sodium polyoxyethylene alkyl allyl ether sulfate, and polyoxyalkylene alkenyl ether ammonium sulfate; carboxylate-type surfactants such as sodium laurate, and potassium oleate; and alkyl phosphate-type, polyoxyethylene alkyl ether phosphate-type, and polyoxyethylene alkyl phenyl ether phosphate-type surfactants. Among these, from the viewpoint of good dispersibility, sulfonate-type surfactants are preferred.

Examples of the nonionic surfactant include ether-type surfactants produced by adding an alkylene oxide such

as ethylene oxide or propylene oxide to a hydroxy group-containing compound such as a higher alcohol or an alkylphenol; ester-type surfactants formed of a polyalcohol such as glycerin or saccharides and a fatty acid bonding via an ester bond; ester/ether-type surfactants produced by adding an alkylene oxide to a fatty acid or a polyalcohol-fatty acid ester; and amide-type surfactants containing a hydrophobic group and a hydrophilic group bonding via an amide bond. Among these, in consideration of solubility in water and stability, ether-type surfactants are preferred, and additionally in consideration of handleability, ethylene oxide-added surfactants are more preferred.

As depending on the molecular weight and the structure of the polyether group-containing silicone to be used, and also as depending on the kind of the surfactant to be used, the amount of the surfactant cannot be said sweepingly, but as a rough indication, the amount is, as a ratio by mass relative to the polyether group-containing silicone referred to as 1, preferably within a range of 0.01 to 0.5, more preferably 0.05 to 0.4, even more preferably 0.1 to 0.3.

<Curable Silicone Resin>

As the curable silicone resin to constitute the release layer, a resin containing a curable silicone resin as the main component can be used, or a modified silicone produced by graftpolymerization with an organic resin such as an urethane resin, an epoxy resin or an alkyd resin can also be used. In the case where the pressure-sensitive adhesive layer is formed of a silicone adhesive agent, the resin preferably contains a fluorosilicone resin.

Regarding the kind of the curable silicone resin, herein usable is any already-existing curable resin including a thermosetting resin such as an addition-type or condensation-type resin, and an electron ray-curable resin such as a UV-curable resin. Plural kinds of curable silicone resins can be used as combined. Further, there is no specific limitation to the coating mode with the curable silicone resin in forming the release layer, and the resin can be in the form of a solution in an organic solvent, or in the form of a water-base emulsion, or in the form with no solvent. For the water-base emulsion, a surfactant is preferably used.

The surfactant can be the same as that used for the polyether group-containing silicon compound mentioned hereinabove. Above all, from the viewpoint of dispersibility of the curable silicone rein, preferred are an anionic surfactant and a nonionic surfactant.

The kind of the silicone rein for use in the present invention is not limited, but from the viewpoint of excellent releasability performance such as light releasability, an alkenyl group-containing curable silicone resin is preferably used in the present invention. As the alkenyl group-containing curable silicone resin, one represented by the following general formula (1) is exemplified as a diorganopolysiloxane.

$$R_{(3-a)}X_aSiO\text{-}(RXSiO)_m\text{-}(R_2SiO)_n\text{-}SiX_aR_{(3-a)} \qquad (1)$$

In the general formula (1), R represents a monovalent hydrocarbon group having 1 to 10 carbon atoms, X represents an alkenyl group-containing organic group, a is an integer of 0 to 3, and is preferably 1. m is 0 or more, but when a = 0, m is 2 or more, m and n each are a number satisfying $100 \leq m+n \leq 20000$. The above formula does not mean a block copolymer. R is a monovalent hydrocarbon group having 1 to 10 carbon atoms, and specifically includes an alkyl group such as a methyl group, an ethyl group, a propyl group or a butyl group, a cycloalkyl group such as a cyclohexyl group, and an aryl group such as a phenyl group or a tolyl group. A methyl group and a phenyl group are especially preferred. X is an alkenyl group-containing organic group, preferably having 2 to 10 carbon atoms. Specifically, it includes a vinyl group, an allyl group, a hexenyl group, an octenyl group, an acryloylpropyl group, an acryloylmethyl group, a methacryloylpropyl group, a cyclohexenylethyl group, and a vinyloxypropyl group. Especially preferred are a vinyl group and a hexenyl group. Specific examples of the formula include a dimethylsiloxane/methylhexenylsiloxane copolymer blocked with a trimethylsiloxy group at both ends of the molecular chain (dimethylsiloxane unit 96 mol%, methylhexenylsiloxane unit 4 mol%), a dimethylsiloxane/methylhexenylsiloxane copolymer blocked with a dimcthylvinylsiloxy group at both ends of the molecular chain (dimethylsiloxane unit 97 mol%, methylhexenylsiloxane unit 3 mol%), and a dimethylsiloxane/methylhexenylsiloxane copolymer blocked with a dimethylhexenylsiloxy group at both ends of the molecular chain (dimethylsiloxane unit 95 mol%, methylhexenylsiloxane unit 5 mol%).

The number-average molecular weight of the curable silicone resin is preferably 50000 or more, and above all, more preferably 80000 or more, especially more preferably 100000 or more, and further more preferably 150000 or more. On the other hand, it is preferably 600000 or less, more preferably 550000 or less, even more preferably 500000 or less.

The release layer is preferably a layer formed by curing a silicone resin composition containing the above-mentioned curable silicone resin and a curing agent for curing the curable silicone resin. The curing agent includes an SiH group-containing polyorganosiloxane. The SiH group-containing polyorganosiloxane can react with an alkenyl group-containing curable silicone resin to form a stronger silicone release layer. As the SiH group-containing polyorganosiloxane, usable here is a linear, branched or cyclic organohydrogenpolysiloxane having at least two, preferably at least three hydrogen atoms bonding to a silicon atom in one molecule, which includes, though not limited thereto, a compound

represented by the following general formula (2).

$$H_bR^1_{(3-b)}SiO-(HR^1SiO)_x-(R^1_2SiO)_y-SiR^1_{(3-b)}H_b \qquad (2)$$

In the general formula (2), $R^1$ represents a monovalent hydrocarbon group having 1 to 6 carbon atoms and not containing an aliphatic unsaturated bond. b is an integer of 0 to 3, x and y each are an integer. Specific examples of the compound include methylhydrogenpolysiloxane blocked with a trimethylsiloxy group at both ends of the molecular chain, dimethylsiloxane/methylhydrogensiloxane copolymer blocked with a trimethylsiloxy group at both ends of the molecular chain, methylhydrogenpolysiloxane blocked with a dimethylhydrogensiloxy group at both ends of the molecular chain, and dimethylsiloxane/methylhydrogensiloxane copolymer blocked with a dimethylhydrogensiloxy group at both ends of the molecular chain.

The molar ratio of the group Si-H to the alkenyl group in the silicone resin composition is preferably 0.1 to 2.0, more preferably 0.3 to 2.0, even more preferably 0.3 to 1.8.

Next shown hereunder are specific examples of commercially-available, various types of silicone resins usable in the present invention. The commercial products include KS-774, KS-775, KS-778, KS-779H, KS-847H, KS-856, X-62-2422, X-62-2461, X-62-1387, X-62-5039, X-62-5040, KNS-3051, X-62-1496, KNS320A, KNS316, X-62-1574A7B, X-62-7052, X-62-7028A/B, X-62-7619, X-62-7213 and X-41-3035, all by Shin-Etsu Chemical Co., Ltd.; YSR-3022, TPR-6700, TPR-6720, TPR-6721, TPR6500, TPR6501, UV9300, UV9425, XS56-A2775, XS56-A2982, UV9430, TPR6600, TPR6604, TPR6605, all by Momentive Performance Materials Inc.; SRX357, SRX211, SD7220, SD7292, LTC750A, LTC760A, LTC303E, LTC856, LTC761, SP7259, BY24-468C, SP7248S, BY24-452, DKQ3-202, DKQ3-203, DKQ3-204, DKQ3-205 and DKQ3-210, all by Toray Dow Corning Corporation; DEHESIVE 636, 919, 920, 921, 924 and 929 of DEHESIVE Series all by Wacker Asahikasei Silicone Co., Ltd.

Preferably, the release layer uses a platinum-based catalyst that accelerates addition reaction. Accordingly, the silicone resin composition preferably contains a platinum-based catalyst. Examples of the component include a platinum compound such as chloroplatinic acid, an alcohol solution of chloroplatinic acid, a complex of chloroplatinic acid and an olefin, and a complex of chloroplatinic acid and an alkenylsiloxane; and platinum black, platinum-carrying silica, and platinum-carrying active carbon. The content of the platinum-based catalyst in the release layer is preferably within a range of 0.01 to 10.0% by mass, more preferably 0.01 to 5.0% by mass. When the content of the platinum-based catalyst in the release layer is 0.01% by mass or more, sufficient peeling force can be attained, curing reaction proceeds sufficiently, and there occurs no failure of surface condition worsening.

On the other hand, when the content of the platinum-based catalyst in the release layer is 3.0% by mass or less, such is advantageous in point of cost, and in addition, there occurs no process failure of generating gel impurities owing to hyperreactivity.

Addition reaction proceeds extremely rapidly and, as the case may be, acetylene alcohol may be added as an addition reaction inhibitor. The component is an organic compound having a carbon-carbon triple bond and a hydroxy group, and is preferably a compound selected from the group consisting of 3-methyl-1-butyn-3-ol, 3,5-dimethyl-1-hexyn-3-ol and phenyl butynol.

For controlling the releasability of the release layer, various peeling controlling agent can be used in the layer. In the case of increasing the peeling force for heavy peeing, in general, a suitable amount of an organopolysiloxane resin, silica particles or silicone species for heavy peeling can be added to the release layer so as to make the layer secure a desired peeling force, and thus the peeling force of the layer is controlled. Specific examples of a commercially-available heavy peeling agent include KS-3800 and X-92-183, both by Shin-Etsu Chemical Co., Ltd.; and SDY7292, BY24-843 and BY24-4980, all by Toray Dow Corning Corporation,

For reducing the peeling force for light peeling, various low-molecular siloxanes are selected, and a suitable amount thereof is added to the release layer so that the siloxane transfer component can exhibit the peeling performance. Examples of the low-molecular siloxane compound include a low-molecular cyclic siloxane such as hexamethylcyclotrisiloxane, octamethylcyclotetrasiloxane, and decamethylcyclopentasiloxane. Other examples of the low-molecular cyclic siloxane include a dimethylsiloxane oligomer blocked with a trimethylsiloxy group at both ends of the molecular chain; and a dimethylsiloxane oligomer blocked with a dimethylhydroxysiloxy group at both ends of the molecular chain. As needed, these compounds can be mixed in use here. These low-molecular siloxane compounds contain a transfer component in the silicone resin generally in an amount of 0.1 to 15.0% by mass, preferably 0.1 to 10.0% by mass, more preferably 0.1 to 5% by mass to attain the desired light peeling performance. When the content is 0.1% by by mass or more, the transfer component is sufficient, and the compound can attain sufficient releasability. On the other hand, when the low-molecular siloxane content is 15.0% by mass or less, the transfer component does not precipitate excessively and there occurs no problem of in-process contamination.

Also preferably, an organosilicon compound represented by the following general formula (3) is added to the release layer for the purpose of bettering the coating film adhesiveness to the polyester film.

$Si(X)_d(Y)_e(R^1)_f$ (3)

wherein X represents an organic group having at least one selected from an epoxy group, a mercapto group, a (meth)acryloyl group, an alkenyl group, a haloalkyl group and an amino group, $R^1$ represents a monovalent hydrocarbon group having 1 to 10 carbon atoms, Y represents a hydrolysable group, d represents an integer of 1 or 2, e represents an integer of 2 or 3, f represents an integer of 0 or 1, and d+e+f=4.

The organosilicon compound represented by the general formula (3) for use herein has two hydrolysable groups Y's capable of forming a siloxane bond by hydrolysis and condensation reaction (D unit source) or has three such hydrolysable groups (T unit source).

In the general formula (3), the monovalent hydrocarbon group $R^1$ has 1 to 10 carbon atoms, and is especially preferably a methyl group, an ethyl group or a propyl group.

In the general formula (3), examples of the hydrolysable group Y include the following: namely, a methoxy group, an ethoxy group, a butoxy group, an isopropenoxy group, an acetoxy group, a butanoxime group and an amino group. One alone or plural kinds of these hydrolysable groups can be used either singly or as combined. When a methoxy group or an ethoxy group is applied, storage stability favorable for coating materials can be given, and because of suitable hydrolyzability thereof, the group is especially preferred.

Specific examples of the organosilicon compound to be added to the release layer include vinyltrimethoxysilane, γ-glycidoxypropyltrimethoxysilane, γ-glycidoxypropylmethyldiethoxysilane, β-(3,4-epoxycyclohexyl)ethyltrimethoxysilane, γ-mercaptopropyltrimethoxysilane, γ-methacryloxypropyltrimethoxysilane, γ-acryloxypropyltrimethoxysilane, γ-aminopropyltriethoxysilane, 5-hexenyltrimethoxysilane, p-styryltrimethoxysilane, trifluoropropyltrimethoxy silane, γ-glycidoxypropyltriethoxysilane, and γ-glycidoxypropylmethyldiisopropenoxysilane.

The content of the organosilicon compound is preferably 0.5 to 5.0 parts by mass relative to 100 parts by mass of the curable silicone resin, more preferably 0.5 to 2.0 parts by mass. When the range is 0.5 parts by mass or more, the desired adhesiveness can be readily secured, and on the other hand, when the range is 5.0 parts by mass or less, adhesiveness to the resin layer on the opposite side to be pasted is not too much strong, and in a scene to be naturally peeled off, the release layer can be readily peeled.

(Wax)

Wax is one selected from a natural wax, a synthetic wax, and a wax composition containing any of them.

The natural wax includes a vegetable wax, an animal wax, a mineral wax, and a petroleum wax. The vegetable wax includes candelilla wax, carnauba wax, rice wax, Japan wax and jojoba oil. The animal wax includes beeswax, lanolin, and whale wax. The mineral wax includes montane wax, ozokerite, and ceresin. The petroleum wax includes paraffin wax, microcrystalline wax, and petrolatum.

The synthetic wax includes a synthetic hydrocarbon, a modified wax, a hydrogenated wax, a fatty acid, an acid amide, an amine, an imide, an ester and a ketone. Examples of the synthetic hydrocarbon include Fischer-Tropsch wax (also known as Sasol wax) and polyethylene wax, and include, in addition these, the following polymers that are low-molecular weight polymers (specifically polymers having a number-average molecular weight of 500 to 20000), namely polypropylene, an ethylene-acrylic acid copolymer, polyethylene glycol, polypropylene glycol, and a block or graft combination of polyethylene glycol and polypropylene glycol. The modified wax includes a montane wax derivative, a paraffin wax derivative, and a microcrystalline wax derivative. Here the derivative is a compound produced by any treatment of purification, oxidation, esterification or saponification, or a combination thereof. The hydrogenated wax includes hardened castor oil and a hardened castor oil derivative.

Among the above, from the viewpoint that the properties are stabilized, a synthetic wax is preferred, and above all, polyethylene wax is more preferred, and polyethylene wax oxide is even more preferred. The number-average molecular weight of the synthetic wax is, from the viewpoint of stability of properties such as blocking performance, and of handleability, preferably within a range of 500 to 30000, more preferably 1000 to 15000, even more preferably 2000 to 8000.

<Crosslinking Agent>

In forming the release layer, preferably, various crosslinking agents are used for the purpose of stiffening the release layer and stabilizing the performance such as water repellency of the layer. Especially preferably, the crosslinking agent is used along with a polyether group-containing silicone compound.

As the crosslinking agent, any conventionally-known material can be used, and examples thereof include a melamine compound, an epoxy compound, a oxazoline compound, an isocyanate compound, a carbodiimide compound, a silane coupling compound, a hydrazide compound, and an aziridine compound. Among these, preferred are a melamine compound, an epoxy compound, an isocyanate compound, an oxazoline compound, a carbodiimide compound, and a

silane coupling compound, and, from the viewpoint of appropriately maintaining the water repellence and of stiffening the release layer, preferred are a melamine compound, an oxazoline compound and an isocyanate compound, and more preferred is a melamine compound. One kind alone or two or more kinds of these crosslinking agents can be used either singly or as combined.

The melamine compound is a compound having a melamine skeleton in the compound, and examples thereof include an alkylolated melamine derivative, a compound produced by partially or completely etherifying an alkylolated melamine derivative with an alcohol, and a mixture thereof. The alcohol to be preferably used for etherification includes preferably methyl alcohol, ethyl alcohol, isopropyl alcohol, n-butanol, and isobutanol. The melamine compound can be a monomer or can be a dimer or a higher polymer, or can also be a mixture thereof for use herein. In consideration of the reactivity with various compounds, the melamine compound contains a hydroxy group. Further, one produced by cocondensation with urea in a part of melamine can also be used here, or for increasing the reactivity of the melamine compound, a catalyst can also be used.

The oxazoline compound is a compound having an oxazoline group in the molecule, and is especially preferably a polymer having an oxazoline group, which can be produced by homopolymerization of an addition-polymerizable oxazoline group-containing monomer alone or copolymerization thereof with any other monomer. The addition-polymerizable oxazoline group-containing monomer includes 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. One or a mixture of two or more of these can be used. Among these, 2-isopropenyl-2-oxazoline is favorable as industrially easily available. The other monomer is not specifically limited so far as it is a monomer copolymerizable with the addition-polymerizable oxazoline group-containing monomer, and examples thereof include (meth)acrylates such as an alkyl (meth)acrylate (where the alkyl group is a methyl group, an ethyl group, an n-propyl group, an isopropyl group, an n-butyl group, an isobutyl group, a t-butyl group, a 2-ethylhexyl group or a cyclohexyl group); unsaturated carboxylic acids such as acrylic acid, methacrylic acid, itaconic acid, maleic acid, fumaric acid, crotonic acid, styrenesulfonic acid and salts thereof (e.g., sodium salt, potassium salt, ammonium salt, tertiary amine salt); unsaturated nitriles such as acrylonitrile and methacrylonitrile; unsaturated amides such as (meth)acrylamide, N-alkyl(meth)acrylamide, N,N-dialkyl(meth)acrylamide (where the alkyl group is a methyl group, an ethyl group, an n-propyl group, an isopropyl group, an n-butyl group, an isobutyl group, a t-butyl group, a 2-ethylhexyl group or a cyclohexyl group); vinyl esters such as vinyl acetate and vinyl propionate; vinyl ethers such as methyl vinyl ether, and ethyl vinyl ether; $\alpha$-olefins such as ethylene and propylene; halogen-containing $\alpha,\beta$-unsaturated monomers such as vinyl chloride, vinylidene chloride, and vinyl fluoride; and $\alpha,\beta$-unsaturated aromatic monomers such as styrene, and $\alpha$-methylstyrene. One or more kinds of these monomers can be used.

The oxazoline group amount of the oxazoline compound is preferably within a range of 0.5 to 10 mmol/g, more preferably 1 to 9 mmol/g, even more preferably 3 to 8 mmol/g, especially more preferably 4 to 6 mmol/g. Using within the range, water repellency performance can be readily controlled.

The isocyanate compound is a compound having an isocyanate derivative structure typified by an isocyanate and a blocked isocyanate. Examples of the isocyanate include an aromatic isocyanate such as tolylene diisocyanate, xylylene diisocyanate, methylene diphenyl diisocyanate, phenylene diisocyanate, and naphthalene diisocyanate; an aliphatic isocyanate having an aromatic ring such as $\alpha,\alpha,\alpha',\alpha'$-tetramethylxylylene diisocyanate; an aliphatic isocyanate such as methylene diisocyanate, propylene diisocyanate, lysine diisocyanate, trimethylhexamethylene diisocyanate, and hexamethylene diisocyanate; and an alicyclic isocyanate such as cyclohexane diisocyanate, methylcyclohexane diisocyanate, isophorone diisocyanate, methylenebis(4-cyclohexyl isocyanate), and isopropylidene dicyclohexyl isocyanate. In addition, also usable here is a polymer or a derivative of these isocyanates, such as burette compounds, isocyanurate compounds, urethodione compounds and carbodiimide modification thereof. One alone or plural kinds of these can be used either singly or as combined. Among the above-mentioned isocyanate compounds, an aliphatic isocyanate or an alicyclic isocyanate is more preferred to an aromatic isocyanate for evading yellowing by UV rays.

In the case of using a blocked isocyanate, examples of the blocking agent for it include bisulfites; phenol compounds such as phenol, cresol, and ethylphenol; alcohol compounds such as propylene glycol monomethyl ether, ethylene glycol, benzyl alcohol, methanol and ethanol; active methylene compounds such as dimethyl malonate, diethyl malonate, methyl isobutanoylacetate, methyl acetoacetate, ethyl acetoacetate, and acetylacetone; mercaptan compounds such as butyl mercaptan, and dodecyl mercaptan; lactam compounds such as $\varepsilon$-caprolactam, and $\delta$-valerolactam; amine compounds such as diphenylaniline, aniline and ethyleneimine; acid amide compounds such as acetanilide and acetamide; and oxime compounds such as formaldehyde, acetaldoxime, acetone oxime, methyl ethyl ketone oxime and cyclohexanone oxime. One alone or two or more kinds of these can be used either singly or as combined. Among the above, from the viewpoint of especially effective for reducing the transference of the pressure-sensitive adhesive layer to adherends, preferred is an isocyanate compound blocked with an active methylene compound.

The isocyanate compound can be used alone, or can be used as a mixture or a coupled form with various polymers. From the viewpoint of improving the dispersibility and the crosslinkability thereof, the isocyanate compound is preferably used as a mixture or a coupled form thereof with a polyester resin or an urethane resin.

The epoxy compound is a compound having an epoxy group in the molecule, and is, for example, a condensation product of epichlorohydrin with a hydroxy group or an amino group of ethylene glycol, polyethylene glycol, glycerin, polyglycerin or bisphenol A, including a polyepoxy compound, a diepoxy compound, a monoepoxy compound, and a glycidylamine compound. Examples of the polyepoxy compound include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether, and trimethylolpropane polyglycidyl ether. Examples of the diepoxy compound include neopentyl glycol diglycidyl ether, 1,6-hexanediol diglycidyl ether, resorcinol diglycidyl ether, ethylene glycol diglycidyl ether, polyethylene glycol diglycidyl ether, propylene glycol diglycidyl ether, polypropylene glycol diglycidyl ether, and polytetramethylene glycol diglycidyl ether, Examples of the monoepoxy compound include allyl glycidyl ether, 2-ethylhexyl glycidyl ether, and phenyl glycidyl ether. Examples of the glycidylamine compound include N,N,N',N'-tetraglycidyl-m-xylylenediamine, and 1,3-bis(N,N-diglycidylamino)cyclohexane.

From the viewpoint of having various good properties, polyether-type epoxy compounds are preferred among the above. In point of the amount of the epoxy group, a trifunctional or higher poly functional polyepoxy compound is preferred to a difunctional compound.

The carbodiimide compound is a compound having at least one carbodiimide or carbodiimide derivative structure in the molecule. For higher strength of the release layer, preferred is a polycarbodiimide compound having two or more such structures in the molecule.

The carbodiimide compound can be synthesized in a conventionally-known technique, and in general, condensation reaction of a diisocyanate compound is employed. The diisocyanate compound is not specifically limited, and any of an aromatic or aliphatic compound is usable. Specifically, examples thereof include tolylene diisocyanate, xylene diisocyanate, diphenylmethane diisocyanate, phenylene diisocyanate, naphthalene diisocyanate, hexamethylene diisocyanate, trimethylhexamethylene diisocyanate, cyclohexane diisocyanate, methylcyclohexane diisocyanate, isophorone diisocyanate, dicyclohexyl diisocyanate, and dicyclohexylmethane diisocyanate.

Further for the purpose of improving the solubility in water and the dispersibility in water of the polycarbodiimide compound within a range not detracting from the advantageous effects of the present invention, a surfactant can be added, or a hydrophilic monomer such as a quaternary ammonium salt or a hydroxyalkylsulfonate salt of a polyalkylene oxide or a dialkylaminoalcohol can also be added for use herein.

The silane coupling compound is an organosilicon compound having an organic functional group and a hydrolysable group such as an alkoxy group in one molecule. Examples thereof include an epoxy group-containing compound such as 3-glycidoxypropylmethyldimethoxysilane, 3-glycidoxypropyltrimethoxsilane, 3-glycidoxypropylmethyldiethoxysilane, 3-glycidoxypropyltriethoxysilane, and 2-(3,4-epoxycyclohexyl)ethyltrimethoxysilane; a vinyl group-containing compound such as vinyltrimethoxysilane, and vinyltriethoxysilane; a styryl group-containing compound such as p-styryltrimethoxysilane, and p-styryltriethoxysilane; a (meth)acryl group-containing compound such as 3-(meth)acryloxypropyltrimethoxysilane, 3-(meth)acryloxypropyl triethoxy si lane, 3-(meth)acryloxypropylmethyldimethoxysilane and 3-(meth)acryloxypropylmethyldiethoxysilane; an amino group-containing compound such as 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, N-2-(aminoethyl)-3-aminopropylmethyldiethoxysilane, 3-triethoxysilyl-N-(1,3-dimethylbutylidene)propylamine, N-phenyl-3-aminopropyltrimethoxysilane, and N-phenyl-3-aminopropyltriethoxysilane; an isocyanurate group-containing compound such as tris(trimethoxysilylpropyl) isocyanurate, and tris(triethoxysilylpropyl) isocyanurate; and a mercapto group-containing compound such as 3-mercaptopropyltrimethoxysilane, 3-mercaptopropyltriethoxysilane, 3-mercaptopropylmethyldimethoxysilane, and 3-mercaptopropylmethyldiethoxysilane.

Among the above-mentioned compounds, from the viewpoint of the strength of the release layer, more preferred are an epoxy group-containing silane coupling compound, a double bond-containing silane coupling compound such as a vinyl group or a (meth)acryl group-containing silane coupling compound, and an amino group-containing silane coupling compound.

These crosslinking agents are used in a plan of improving the performance of the release layer by reaction in a drying step or a film-forming step. It is presumed that unreacted substances of these crosslinking agents, or reacted compounds, or mixtures thereof may exist in the finally formed release layer.

<Various Polymers>

In forming the release layer, for improving coating appearance and transparency and for controlling water repellency and slidability, various polymers such as a polyester resin, an acrylic resin, a urethane resin, and a vinyl resin can be used. Among various polymers, from the viewpoint of easy control of water repellency, a polyester resin, an acrylic resin, a urethane resin, and a vinyl resin are preferred, and a polyester resin and an acrylic resin are more preferred.

Of the polyester resin, the main constituent component is, for example, a polycarboxylic acid and a polyhydroxy compound mentioned below. Specifically, the polycarboxylic acid usable here includes terephthalic acid, isophthalic

acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium-sulfoterephthalic acid, 5-sodiumsulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, monopotassium trimellitate, and esterforming derivatives thereof; and the polyhydroxy compound also usable here includes ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylylene glycol, bisphenol A-ethylene glycol adduct, diethylene glycol, triethylene glycol, polyethylene glycol, polypropylene glycol, polytetramethylene glycol, polytetramethylene oxide glycol, dimethylolpropionic acid, glycerin, trimethylolpropane, sodium dimethylolethylsulfonate, and potassium dimethylolpropionate. One or more can be appropriately selected from these compounds, and a polyester resin can be synthesized by an ordinary polycondensation method.

An acrylic resin is a polymer formed of a polymerizable monomer including an acrylic or methacrylic monomer (hereinunder acryl and methacryl may be collectively abbreviated as (meth)acryl). The resin can be a homopolymer or a copolymer, or can also be a copolymer with any other polymerizable monomer than an acrylic or methacrylic monomer.

The resin further includes a copolymer with the polymer and any other polymer (for example, polyester, polyurethane). Examples thereof include a block copolymer and a graft copolymer. The resin further includes a polymer produced by polymerizing a polymerizable monomer in a polyester solution or a polyester dispersion (as the case may be, including a polymer mixture). Similarly, also included is a polymer produced by polymerizing a polymerizable monomer in a polyurethane solution or a polyurethane dispersion (as the case may be, including a polymer mixture). Similarly, also included is a polymer produced by polymerizing a polymerizable monomer in any other polymer solution or dispersion (as the case may be, including a polymer mixture).

Not specifically limited, examples of especially typical compounds of the above-mentioned polymerizable monomer include various carboxy group-containing monomers and salts thereof, such as acrylic acid, methacrylic acid, crotonic acid, itaconic acid, fumaric acid, maleic acid, and citraconic acid; various hydroxy group-containing monomers such as 2-hydroxyethyl (meth)acrylate, 2-hydroxypropyl (meth)acrylate, 4-hydroxybutyl (meth)acrylate, monobutyl hydroxyfumarate, and monobutyl hydroxyitaconate; various (meth)acrylates such as methyl (meth)acrylate, ethyl (meth)acrylate, propyl (meth)acrylate, butyl (meth)acrylate, 2-ethylhexyl (meth)acrylate, and lauryl (meth)acrylate; various nitrogen-containing compounds such as (meth)acrylamide, diacetone-acrylamide, N-methylol-acrylamide and (meth)acrylonitrile; various styrene derivatives such as styrene, α-methylstyrene, divinylbenzene, and vinyltoluene; various vinyl esters such as vinyl propionate and vinyl acetate; various silicon-containing polymerizable monomers such as γ-methacryloxypropyltrimethoxysilane, and vinyltrimethoxysilane; phosphorus-containing vinyl monomers; various vinyl halides such as vinyl chloride and vinylidene chloride; and various conjugated dienes such as butadiene.

The urethane resin is a polymer compound containing a urethane bond in the molecule. The urethane resin is generally produced by reaction of a polyol and an isocyanate. The polyol includes polycarbonate polyols, polyester polyols, polyether polyols, polyolefin polyols, and acryl polyols. One kind alone or plural kinds of these compounds can be used.

The polycarbonate polyols can be produced by dealcoholation reaction from polyalcohols and a carbonate compound. The polyalcohols include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol, and 3,3-dimethylolheptane. The carbonate compound includes dimethyl carbonate, diethyl carbonate, diphenyl carbonate and ethylene carbonate. Examples of the polycarbonate polyols to be obtained by the reaction include poly(1,6-hexylene) carbonate, and poly(3-methyl-1,5-pentylene) carbonate.

The polyester polyols include those obtained by reaction of a polycarboxylic acid (e.g., malonic acid, succinic acid, glutaric acid, adipic acid, pimelic acid, suberic acid, sebacic acid, fumaric acid, maleic acid, terephthalic acid, isophthalic acid) or an acid anhydride thereof and a polyalcohol (e.g., ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanolbenzene, bishydroxyethoxybenzene, alkyldialkanolamine, lactonediol).

The polyether polyols include polyethylene glycol, polypropylene glycol, polyethylene propylene glycol, polytetramethylene ether glycol, and polyhexamethylene ether glycol.

Examples of the polyisocyanate compound to be used for obtaining urethane resins include an aromatic diisocyanate such as tolylene diisocyanate, xylylene diisocyanate, methylene diphenyl diisocyanate, phenylene diisocyanate, naphthalene diisocyanate, and tolidine diisocyanate; an aromatic ring-having aliphatic diisocyanate such as α,α,α',α'-tetramethylxylylene diisocyanate; an aliphatic diisocyanate such as methylene diisocyanate, propylene diisocyanate,

lysine diisocyanate, trimethylhexamethylene diisocyanate, and hexamethylene diisocyanate; and an alicyclic diisocyanate such as cyclohexane diisocyanate, methylcyclohexane diisocyanate, isophorone diisocyanate, dicyclohexylmethane diisocyanate, and isopropylidene dicyclohexyl diisocyanate. One alone or plural kinds of these can be used either singly or as combined.

A chain extender can be used in synthesizing urethane resins, and the chain extender is not specifically limited so far as it has at least two active groups capable of reacting with an isocyanate group. In general, a chain extender having two hydroxy groups or amino groups can be used mainly.

Examples of the chain extender having two hydroxy groups include glycols of an aliphatic glycol such as ethylene glycol, propylene glycol and butanediol; an aromatic glycol such as xylylene glycol and bishydroxyethoxybenzene; and an ester glycol such as neopentyl glycol hydroxypivalate. Examples of the chain extender having two amino groups include an aromatic diamine such as tolylenediamine, xylylenediamine, and diphenylmethanediamine; an aliphatic diamine such as ethylenediamine, propylenediamine, hexanediamine, 2,2-dimethyl-1,3-propanediamine, 2-methyl-1,5-pentanediamine, trimethylhexanediamine, 2-butyl-2-ethyl-1,5-pentanediamine, 1,8-octanediamine, 1,9-nonanediamine, and 1,10-decanediamine; and an alicyclic diamine such as 1-amino-3-aminomethyl-3,5,5-trimethylcyclohexane, dicyclohexylmethanediamine, isopropylidenecyclohexyl-4,4'-diamine, 1,4-diaminocyclohexane, and 1,3-bisaminomethylcyclohexane.

The urethane resin can take a solvent as a medium, but preferably takes water as a medium. For dispersing or dissolving the urethane resin in water, there can be employed forced emulsification using an emulsifier, self-emulsification or solubilization in water by introducing a hydrophilic group into the urethane resin. In particular, self-emulsification of introducing an ionic group into the structure of the urethane resin for ionomerization is preferred in point of excellent liquid storage stability and excellent water resistance and transparency of the resultant release layer.

Various ionic groups can be included, including a carboxy group, a sulfonic acid, a phosphonic acid, and a quaternary ammonium salt, and a carboxy group is preferred. As a method of introducing a carboxy group into the urethane resin, various methods can be employed in each step of polymerization. For example, employable here are a method of using a carboxy group-having resin as a copolymerization component in prepolymer synthesis, and a method of using a carboxy group-having component as one component of a polyol, a polyisocyanate or a chain extender. In particular, preferred is a method of using a carboxy group-containing diol to introduce a desired amount of a carboxy group depending on the amount charged of the component. For example, dimethylolpropionic acid, dimethylolbutanoic acid, bis-(2-hydroxyethyl)propionic acid, or bis-(2-hydroxyethyl)butanoic acid can be copolymerized with the diol used in polymerization to give the urethane resin. Preferably, the carboxy group is in the form of a salt neutralized with ammonia, amine, alkali metals or inorganic alkalis. Especially preferred are ammonia, trimethylamine and triethylamine. The polyurethane resin of the type can use the carboxyl group, from which the neutralizing agent was removed in the drying step after coating, as the crosslinking reaction point with any other crosslinking agent. Accordingly, the resin is excellent in stability in the form of a liquid before coating, and the durability, the solvent resistance, the water resistance and the antiblocking property of the resultant release layer can be further improved.

<Antistatic Agent>

An antistatic release layer is also a preferred embodiment, in which an antistatic agent is added to the release layer to prevent defects by film peeling charge or friction charge to cause adhesion of ambient dust to the layer. The antistatic agent to be added to the release layer is not specifically limited, and a conventionally-known antistatic agent can be used. From the viewpoint of good heat resistance and wet heat resistance, a polymer-type antistatic agent is preferred. Examples of the polymer-type antistatic agent include an ammonium group-having compound, a polyether compound, a sulfonic acid group-having compound, a betaine compound and an electroconductive polymer.

The ammonium group-having compound is a compound having an ammonium group in the molecule, and includes an ammonium compound of an aliphatic amine, an alicyclic amine or an aromatic amine. The ammonium group-having compound is preferably a polymer-type ammonium group-having compound, and the structure is preferably such that the ammonium group is not a counter ion but is incorporated in the main chain or in the side chain of the polymer. For example, as the compound of the type, preferably used is an ammonium group-having polymer compound produced by polymerizing a monomer having an addition-polymerizable ammonium group or an ammonium group precursor such as an amine. The polymer can be a homopolymer of a monomer containing an addition-polymerizable ammonium group or an ammonium group precursor such as an amine, or a copolymer of such a monomer with any other monomer.

Among the ammonium group-having compound, also preferred is a pyrrolidinium ring-having compound as excellent in antistatic performance and thermal stability.

The two substituents bonding to the nitrogen atom in the pyrrolidinium ring-having compound are each independently an alkyl group or a phenyl group, and the alkyl group and the phenyl group can be substituted with a group mentioned below. Examples of the substitutable group include a hydroxy group, an amide group, an ester group, an alkoxy group, a phenoxy group, a naphthoxy group, a thioalkoxy group, a thiophenoxy group, a cycloalkyl group, a

trialkylammoniumalkyl group, a cyano group, and a halogen. The two substituents bonding to the nitrogen atom can chemically bond, and examples thereof include $-(CH_2)_m-$(m = integer of 2 to 5), $-CH(CH_3)CH(CH_3)-$, -CH=CH-CH=CH-, -CH=CH-CH=N-, -CH=CH-N=CH-, $-CH_2OCH_2-$, and $-(CH_2)_2O(CH_2)_2-$.

The pyrrolidinium ring-having polymer can be produced by cyclic polymerization of a diallylamine derivative using a radical polymerization catalyst. Not specifically limited thereto, the polymerization can be performed in a known method using a polymerization initiator such as hydrogen peroxide, benzoyl peroxide or a tertiary butyl peroxide in a polar solvent such as water, methanol, ethanol, isopropanol, formamide, dimethylformamide, dioxane or acetonitrile. In the present invention, a compound having a carbon-carbon unsaturated bond polymerizable with a diallylamine derivative can be used as a copolymerization component.

In the point of excellent antistatic performance and wet heat stability, a polymer having a structure of the following general formula (4) is also preferred. The polymer can be a homopolymer or a copolymer, or can be further copolymerized with any other plural components.

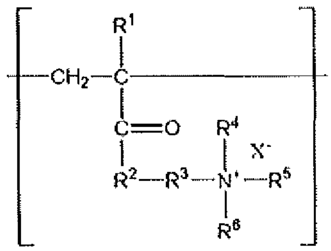

(4)

For example, in the above formula, the substituent $R^1$ represents a hydrogen atom, or a hydrocarbon group such as an alkyl group having 1 to 20 carbon atoms or a phenyl group, $R^2$ represents -O-, -NH- or -S-, $R^3$ represents an alkylene group having 1 to 20 carbon atoms, or any other structure capable of establishing the structure of the general formula (4), $R^4$, $R^5$, and $R^6$ each independently represent a hydrogen atom, a hydrocarbon group such as an alkyl group having 1 to 20 carbon atoms or a phenyl group, or a functional group-given hydrocarbon group such as a hydroxyalkyl group, and $X^-$ represents various types of counter ion.

Among the above, especially from the viewpoint of excellent antistatic performance and wet heat resistance, in the general formula (4), the substituent $R^1$ is preferably a hydrogen atom or an alkyl group having 1 to 6 carbon atoms, $R^3$ is preferably an alkyl group having 1 to 6 carbon atoms, and also preferably, $R^4$ , $R^5$ and $R^6$ each are independently a hydrogen atom or an alkyl group having 1 to 6 carbon atoms, and even more preferably any one of $R^4$ , $R^5$ and $R^6$ is a hydrogen atom and the other substituent is an alkyl group having 1 to 4 carbon atoms.

Examples of the counter ion to the ammonium group of the above-mentioned ammonium group-having compound include ions of a halogen ion, a sulfonate, a phosphate, a nitrate, an alkylsulfonate or a carboxylate.

The number-average molecular weight of the ammonium group-having compound is 1000 to 500000, preferably 2000 to 350000, more preferably 5000 to 200000. When the molecular weight is 1000 or more, the strength of the coating film can be sufficient, and thermal stability can be maintained. When the molecular weight is 500000 or less, the viscosity of the coating liquid can be low and the handleability and the applicability thereof can be good.

Examples of the polyether compound include polyethylene oxide, polyether ester amide, and acrylic resin having polyethylene glycol in the side chain.

The sulfonic acid group-having compound is a compound having a sulfonic acid or a sulfonate salt in the molecule, and for this, for example, a compound having a large quantity of a sulfonic acid or a sulfonate salt such as a polystyrene-sulfonic acid is preferably used.

Examples of the electroconductive polymer include polythiophene-type, polyanilinetype, polypyrrole-type and polyacetylene-type polymers, and among them, preferred is a polythiophene-type polymer in which, for example, poly(3,4-ethylenedioxythiophene) is used together with polystyrenesulfonic acid. The electroconductive polymer is preferred as compared with the above-mentioned other antistatic agents, because the resistance value can be lowered. However, on the other hand, in applications where coloring and cost are taken into account, it is necessary to reduce the amount of the polymer to be used.

Further, within a range not detracting from the advantageous effects of the present invention, the release layer can contain, as needed, an antifoaming agent, a coating improver, a tackifier, an organic lubricant, a UV absorbent, an antioxidant, a foaming agent, a dye and a pigment in combination therewith.

<Proportion of Release Agent>

The proportion of the release agent in the release layer varies depending on the kind of the release agent, and this cannot be said generally, but is preferably within a range of 3% by mass or more, more preferably 15% by mass or

more, even more preferably within a range of 25 to 99% by mass. When the proportion is 3% by mass or more, sufficient water repellency can be attained.

In the case where a long-chain alkyl compound or a fluorine compound is used as the release agent, the proportion thereof in the release layer is preferably within a range of 5% by mass or more, more preferably 15 to 99% by mass, even more preferably 20 to 95% by mass, further more preferably 25 to 90% by mass. Using within the range, the water repellency and the peelability from the pressure-sensitive adhesive layer can be effective.

The proportion of the crosslinking agent is preferably within a range of 95% by mass or less, more preferably 1 to 80% by mass, even more preferably 5 to 70% by mass, further more preferably 10 to 50% by mass. As the crosslinking agent, preferred is a melamine compound, an oxazoline compound or an isocyanate compound, and from the viewpoint of water repellency and the strength of the release layer, especially preferred is a melamine compound.

In the case where an addition-type silicone compound is used as the release agent, the proportion thereof in the release layer is preferably within a range of 5% by mass or more, more preferably 25% by mass or more, even more preferably 50% by mass or more, especially more preferably 70% by mass or more. The upper limit of the preferred range is 99% by mass, and a more preferred upper limit is 90% by mass. Using within the range, water repellency and the peelability from the pressure-sensitive adhesive layer can be effective, and the appearance of the release layer can be good.

In the case where a polyether group-containing silicone is used as the release agent, the proportion thereof in the release layer is preferably within a range of 5% by mass or more, more preferably 10% by mass or more, even more preferably 25% by mass or more, especially more preferably 40% by mass or more. The upper limit of the preferred range is 99% by mass, a more preferred upper limit is 80% by mass, and an even more preferred upper limit is 70% by mass. Using within the range, water repellency and the peelability from the pressure-sensitive adhesive layer can be effective, and the appearance of the release layer can be good.

The proportion of the crosslinking agent is preferably within a range of 90% by mass or less, more preferably 10 to 70% by mass, even more preferably 20 to 40% by mass.

In the case where a wax is used as the release agent, the proportion thereof in the release layer is preferably within a range of 5% by mass or more, more preferably 10 to 90 % by mass, even more preferably 20 to 80% by mass, further more preferably 25 to 70% by mass. Using within the range, water repellency can be good.

The proportion of the crosslinking agent is preferably within a range of 90% by mass or less, more preferably 10 to 70% by mass, even more preferably 20 to 50% by mass. As the crosslinking agent, a melamine compound is preferred from the viewpoint of water repellency and the strength of the release layer.

<Proportion of Antistatic Agent>

Further, in the case where an antistatic release layer having antistatic performance is provided as the release layer, the proportion of the antistatic agent therein varies in point of the proper amount thereof depending on the kind of the antistatic agent, and this cannot be said generally, but is preferably within a range of 0.5% by mass or more, more preferably 3 to 90% by mass, even more preferably 5 to 70% by mass, especially more preferably 8 to 60% by mass.

In the case where an antistatic agent except an electroconductive polymer is used as the antistatic agent, the proportion thereof in the antistatic release layer is preferably within a range of 5% by mass or more, more preferably 10 to 90% by mass, even more preferably 20 to 70% by mass, especially more preferably 25 to 60% by mass.

In the case where an electroconductive polymer is used as the antistatic agent, the proportion thereof in the antistatic release layer is preferably within a range of 0.5% by mass or more, more preferably 3 to 70% by mass, even more preferably 5 to 50% by mass, especially more preferably 8 to 30% by mass.

The components in the release layer can be analyzed by, for example, TOF-SIMS, ESCA, fluorescent X-ray or IR analysis.

On the other hand, in the case where the release layer is formed by off-line coating, one example of using a curable silicone resin is described.

Regarding the kind of the curable silicone resin, as mentioned above, herein usable is any already-existing curable resin such as a thermocurable resin, i.e., an addition-type or condensation-type resin, or an electron beam-curable resin such as a UV-curable resin. If desired, plural kinds of curable silicone resins can be used as combined. The coating mode for the curable silicon resin in forming the release layer is not also specifically limited, and any mode of a solution dissolved in an organic solvent, or a mode of a water-base emulsion, or a solventless mode can be employed.

In forming the release layer, one preferred method is that the series of compounds described above are used as a solution or a dispersion in a solvent to have a solid concentration, as a rough indication, of 0.1 to 80% by mass or so, and the thus-prepared liquid is applied onto a film by coating. In particular, in the case where the layer is formed by in-line coating, an aqueous solution or an aqueous dispersion is more preferred. For the purpose of improving the dispersibility in water and the film formability, a small amount of an organic solvent can be added to the coating liquid. One kind alone of the organic solvent can be used, or two or more kinds thereof can be used when necessary.

<Method for Formation of Release Layer>

Examples of the method for release layer formation include methods of coating, transfer or lamination. In consideration of ease of release layer formation, coating for the formation is preferred.

The coating method includes an in-line coating method of performing during the film production process, and an off-line coating method where a film once produced is coated outside the system.

Specifically, in-line coating is a method where coating is performed in any stage of melt-extruding a resin for film formation, then stretching, thermally fixing and winding up the resultant film. In general, any of an unstretched film prepared by melting and rapidly cooling, a monoaxially stretched film, a biaxially stretched film before thermal fixation, and a thermallyfixed film before wound up is coated. Though not limited to the following, for example, in sequential biaxial stretching, especially excellent is a method of coating a monoaxiallystretched film that has been stretched in a lengthwise direction (longitudinal direction) and then stretching it in a lateral direction. According to the method, film production and release layer formation can be carried out at the same time, and the method is advantageous in point of production cost. In addition, in the method, the coated film is stretched, and therefore the thickness of the release layer can be changed by changing the draw ratio, and as compared with an off-line coating method, thin-film coating can be performed easily.

In addition, the release layer is formed on the film before stretching, and therefore the release layer can be stretched along with the substrate film, and accordingly, the release layer can be firmly pasted to the substrate film. Further, in production of a biaxially-stretched polyester film, the film is stretched while the ends thereof are clipped and held, and therefore the film can be restrained in the longitudinal and lateral directions, and in the thermal fixation step, the film can be exposed to high temperatures while the planarity thereof can be maintained as such with no wrinkling.

Consequently, the thermal treatment to be performed after coating can be attained at high temperatures that could not be attained in any other method, and therefore the film formability of the release layer improves, and the release layer and the substrate film can be pasted more firmly, and even further, the release layer can be surely strong. In particular, when a crosslinking agent is reacted to express stable water repellency performance, the method is extremely effective.

As the coating method, any conventionally-known coating system can be employed, and examples thereof include gravure coating, reverse roll coating, die coating, air doctor coating, blade coating, rod coating, bar coating, curtain coating, knife coating, transfer roll coating, squeeze coating, dip coating, kiss coating, spray coating, calender coating, and extrusion coating.

The drying and curing condition in forming the release layer on a film is not specifically limited. In the case of a coating method, the solvent such as water used in the coating liquid is dried preferably within a range of 70 to 150°C, more preferably 80 to 130°C, even more preferably 90 to 120°C. The drying time is, as a rough indication, within a range of 3 to 200 seconds, preferably 5 to 120 seconds.

As needed, thermal treatment and an active energy ray irradiation such as UV irradiation can be combined here. The polyester film can be previously surface-treated by corona treatment or plasma treatment.

The polyester film has a pressure-sensitive adhesive layer on the release layer surface. Though not specifically limited, the method for forming the pressure-sensitive adhesive layer includes a method of pasting a pressure-sensitive adhesive layer formed on a releasable substrate to any other resin film, and a method of directly applying a coating liquid that contains a pressure-sensitive adhesive layer component.

In the method of pasting with a releasable substrate, attention needs to be paid to prevent air bubbles and wrinkles from being generating at the time of pasting, but the method is advantageous in that a heating step is not applied to the final product, adhesive film. In the directly applying method, heat is given to the film for drying and curing in forming the pressure-sensitive adhesive layer and therefore it is necessary to consider a change in the shrinkage ratio of the film, as the case may be, but the method is advantageous in that the pressure-sensitive adhesive layer to be formed can be uniform. In general, in accordance with the constitution and the object of the final product, the method can be appropriately selected.

[Average Surface Roughness (arithmetical mean height: Sa) and Maximum Peak Height (Sp) of the surface of release layer]

The average surface roughness (Sa) of the surface of the release layer of the release film of the present invention is 200 nm or more. When it is less than 200 nm, water escape or bubbles escape is insufficient in pasting to adherends. From the above-mentioned viewpoint, the average surface roughness (Sa) of the surface of the release layer is more preferably 250 nm or more. On the other hand, from the viewpoint of transparency of the release film of the present invention, it is preferably 500 nm or less, more preferably 450 nm or less, even more preferably 420 nm or less.

The maximum peak height (Sp) of the surface of the release layer of the release film of the present invention is 300 nm or more. When it is less than 300 nm, water escape or bubbles escape is insufficient in pasting to adherends. From the above-mentioned viewpoint, the maximum peak height (Sp) of the surface of the release layer is preferably

350 nm or more, more preferably 400 nm or more. On the other hand, from the viewpoint of transparency of the release film of the present invention, it is preferably 1000 nm or less, more preferably 800 nm or less, even more preferably 650 nm or less.

The surface roughness (Sa, arithmetical mean height, ISO 25178 Surface Profile) is a parameter of expanding Ra (arithmetical mean height of line) to an area, and is a numerical value that expresses an average of absolute values of differences in the heights of different points, relative to the average plane of the surface. The maximum peak height (Sp) is determined by three-dimensionally expanding a two-dimensional maximum peak height (Rp), and is a maximum value of the height from a surface having a height 0 in the measurement region.

[Projection Height (X) and Number of Projections (Y)]

The distribution curve representing the relationship between the projection height (X) and the number of projections (Y) on the surface of the release layer of the release film of the present invention satisfies the following expression (1). When the following expression (1) is satisfied, water escape or bubbles escape can be easy in pasting to adherends. From the viewpoint, -(logY2-logY1)/(X2-X1) is more preferably 1.2 or more, even more preferably 1.3 or more. The upper limit is not specifically limited, but from the viewpoint of transparency of the release film, it is preferably 3.0 or less, more preferably 2.5 or less.

$$-(\log Y2-\log Y1)/(X2-X1) \geq 1.0 \qquad (1)$$

wherein Y1 and Y2 each represent the number of projections (number/$mm^2$) on the surface of the release layer where the projection height on the surface of the release layer X1 = 0.98 μm and X2 = 1.98 μm.

The expression (1) in the present invention is an aggregate of the number of projections of each projection height.

In general, even when the projection height is defined in a pinpoint mode, in the case where the recesses and the projections of the film surface in the present invention are utilized, it is considered necessary to create a three-dimensional overview of the recess-projection profile present in the film. Among them, when two points of 0.98 μm and 1.98 μm, which are projection heights on the relatively rough surface side and which are expected to attain a bubbles escape effect, are selected, and when the inclination of the straight line passing through the two points is varied, the region surrounded by the straight lines is indicated to be a preferred range for use for the present invention.

More preferably, the number of the projections having a projection height of 0.98 μm is simultaneously satisfied to be 1000/$mm^2$ or more. Even more preferably the number of the projections is 2000/$mm^2$ or more, and further more preferably 3000/$mm^2$ or more.

Also preferably, the number of the projections having a projection height of 1.98 μm or more is 3/$mm^2$ or more, and the number of the projections is more preferably 10/$mm^2$ or more, even more preferably 30/$mm^2$ or more. In particular, the above-mentioned requirements (the requirement of the equation (1) and the requirement of the number of projections having a projection height 0.98 μm) are satisfied at the same time and, in addition thereto as an additional requirement, it is preferable that the number of projections having a projection height of 1.98 μm or more is 3/$mm^2$ or more.

When the range is satisfied, the bubbles escape effect can be good in pasting the adhesive sheet to which the release film is attached, to adherends.

[Air Escape Index]

The air escape index on the release surface is preferably 2000 seconds or less, more preferably 1500 seconds or less, even more preferably 1000 seconds or less, and among them, especially preferably 500 seconds or less.

Falling within the range indicates that air rapidly escapes through voids and the release surface has a texture in which air escapes well.

The air escape index can be measured according to the method described in the section of Examples.

<Pressure-sensitive adhesive layer>

The release film of the present invention is a film for protecting a pressure-sensitive adhesive layer, and the pressure-sensitive adhesive layer used here is preferably any of a silicone-based pressure-sensitive adhesive layer, an acryl-based pressure-sensitive adhesive layer or a urethane-based pressure-sensitive adhesive layer.

(Silicone-based Pressure-sensitive adhesive layer)

The silicone adhesive agent to constitute the silicone-based pressure-sensitive adhesive layer can be any

adhesive agent containing a silicone as a main component resin.

The "main component resin" means a resin whose content ratio (by mass) is the largest among the resins constituting the adhesive agent.

Examples of the silicone adhesive agent include an addition reaction-type, a peroxide curable-type or a condensation reaction-type silicone adhesive agent. Above all, from the viewpoint of curability at a low temperature within a short period of time, an addition reaction-type silicone adhesive agent is preferably employed. The addition reaction-type silicone adhesive agent cures during formation of a pressure-sensitive adhesive layer on a support. In the case where an addition reaction-type silicone adhesive agent is used as the silicone adhesive agent, the silicone adhesive agent can contain a catalyst such as a platinum catalyst.

For example, the addition reaction-type silicone adhesive agent can be cured by preparing a silicone resin solution optionally diluted with a solvent such as toluene, stirring it along with a catalyst such as a platinum catalyst added thereto until a uniform liquid can be formed, then applying the liquid onto a support, and curing it thereon at 100 to 130°C for 1 to 5 minutes. Also if desired, a crosslinking agent or an additive for controlling the adhesion force can be added to the addition reaction-type silicone adhesive agent, or the substrate film before formation of a pressure-sensitive adhesive layer thereon can be subjected to primer treatment.

Examples of commercial products of the silicone resin for use in the addition reaction-type silicone adhesive agent include SD4580PSA, SD4584PSA, SD4585PSA, SD4587LPSA, SD4560PSA, SD4570PSA, SD4600FCPSA, SD4593PSA, DC7651ADHESIVE, DC7652ADHESIVE, LTC-755, and LTC-310 (all by Toray Dow Corning Corporation), KR-3700, KR-3701, KR-3704, X-40-3237-1, X-40-3240, X-40-3291-1, X-40-3229, X-40-3323, X-40-3306, and X-40-3270-1 (all by Shin-Etsu Chemical Co., Ltd.), AS-PSA001, AS-PSA002, AS-PSA003, AS-PSA004, AS-PSA005, AS-PSA012, AS-PSA014, and PSA-7465 (all by Arakawa Chemical Industrial Co., Ltd.), and TSR1512, TSR1516, and TSR1521 (all by Momentive Performance Materials Corporation).

(Acryl-based Pressure-sensitive adhesive layer)

The acryl-based pressure-sensitive adhesive layer can be formed of an adhesive composition containing a (meth)acrylate (co)polymer and optionally further containing a photopolymerization initiator, a crosslinking agent, a silane coupling agent and any other material. The acryl-based pressure-sensitive adhesive layer can be formed of a conventionally-known adhesive composition, and for example, the adhesive composition described in JP 2019-210446 A can be employed.

(Urethane-based Pressure-sensitive adhesive layer)

The urethane-based pressure-sensitive adhesive layer can be formed using a urethane adhesive agent to be described below.

The urethane base polymer of the urethane adhesive agent usable here can be a reaction product of a polyol and a polyisocyanate compound.

Examples of the polyol component include a polymer-type polyol such as a polyester polyol, a polyether polyol, a polycarbonate polyol, and a caprolactone polyol. One alone or two or more kinds of these polyol components can be used either singly or as combined.

Examples of the polyisocyanate compound include an aliphatic polyisocyanate, an alicyclic polyisocyanate and an aromatic polyisocyanate. One alone or two or more kinds of these polyisocyanate compounds can be used either singly or as combined.

(Thickness of Pressure-sensitive adhesive layer)

The thickness of the pressure-sensitive adhesive layer (after dried) is preferably 1 to 100 μm, more preferably 5 to 80 μm, even more preferably 10 to 60 μm, especially more preferably 20 to 50 μm.

When the thickness is not less than the lower limit value, the layer can have sufficient adhesion force, and when it is not more than the upper limit value, the layer is easy to handle.

(Total Thickness of Release Film with pressure-sensitive adhesive layer)

The total thickness of the release film with the pressure-sensitive adhesive layer is, from the viewpoint of easy handleability, preferably 500 μm or less, more preferably 40 μm or more and 350 μm or less, even more preferably 40 μm or more and 200 μm or less, further more preferably 50 μm or more and 150 μm or less.

[Film Laminate]

A first embodiment of the film laminate is an embodiment in which a substrate film (A) is pasted to the release layer of the release film via a pressure-sensitive adhesive layer. The release layer and the pressure-sensitive adhesive layer are as mentioned above.

(Substrate Film (A))

Examples of the substrate film (A) include a resin film formed as a film from a polymer such as polyethylene, polypropylene, cycloolefin polymer (COP), polyester, polystyrene, acrylic resin, polycarbonate, polyurethane, triacetyl cellulose (TAC), polyvinyl chloride, polyether sulfone, polyamide, polyimide or polyamide imide. So far as film formation is possible, a polymer blend prepared by blending these materials, or a copolymer in which the structural units are complicated can also be used. Among these, from the viewpoint of appropriate flexibility and good handleability, a polyurethane film is preferred.
The thickness of the substrate film (A) is preferably 25 to 350 μm, more preferably 50 to 250 μm, even more preferably 75 to 200 μm, especially more preferably 75 to 150 μm.
Further, a functional layer can be provided on the substrate film (A) for imparting thereto various functions such as antifouling performance, water repellency, antistatic performance, weather resistance, fingerprint adhesion inhibitor, and hard coating. A print layer can also be provided.

(Surface Roughness (Sa) of Pressure-sensitive adhesive layer Surface)

The film laminate of the present invention is preferably such that the surface roughness (arithmetical mean height: Sa) of the pressure-sensitive adhesive layer surface after peeling the release film is 200 nm or more. When the surface roughness is 200 nm or more, it is preferable since the film laminate has substantially no residual water or bubbles when pasted to adherends. From these viewpoints, the surface roughness of the pressure-sensitive adhesive layer surface is more preferably 250 nm or more, even more preferably 300 nm or more. On the other hand, from the viewpoint of transparency of the adhesive film formed of the substrate (A) and the pressure-sensitive adhesive layer, the surface roughness is preferably 600 nm or less, more preferably 500 nm or less, even more preferably 400 nm or less.
The surface roughness of the pressure-sensitive adhesive layer surface is transferred from the surface roughness of the release layer surface, and therefore, by controlling the surface roughness of the release layer surface and the elastic modulus of the pressure-sensitive adhesive layer, the surface roughness of the pressure-sensitive adhesive layer surface can be controlled.
From the viewpoint of the transfer ratio of the surface profile of the release layer to the pressure-sensitive adhesive layer surface, Sa of pressure-sensitive adhesive layer surface/Sa of release layer surface is preferably 0.9 or more. When it is 0.9 or more, it can be said that the surface profile of the release layer can be reproduced accurately.

(Elastic Modulus of Pressure-sensitive adhesive layer)

The elastic modulus of the pressure-sensitive adhesive layer at 25°C is preferably 20 MPa or more. When the elastic modulus is 20 MPa or more, the recess/projection pattern to be transferred from the release layer is well reflected without leveling of the pressure-sensitive adhesive layer, and the above-mentioned surface roughness (Sa) is easy to attain. On the other hand, the elastic modulus of the pressure-sensitive adhesive layer is preferably 80 MPa or less. When it is 80 MPa or less, the layer can have suitable softness, and the surface roughness (Sa) of the release layer can be favorably transferred thereon. From these viewpoints, the elastic modulus of the pressure-sensitive adhesive layer at 25°C is preferably within a range of 20 MPa to 80 MPa, more preferably within a range of 20 MPa to 60 MPa.
The elastic modulus of the pressure-sensitive adhesive layer is a value measured according to the method described in the section of Examples.
Though not specifically limited, the thickness of the pressure-sensitive adhesive layer is preferably 1 to 100 μm, more preferably 5 to 80 μm, even more preferably 10 to 60 μm, and among these, especially more preferably 20 to 50 μm. When the range is satisfied, good adhesive properties can be expressed.
When the thickness is not less than the lower limit, the layer can have sufficient adhesion force, when when it is not more than the upper limit, the layer is easy to handle.

<Production Method for Film Laminate>

The production method for the film laminate of the present invention is not specifically limited. For example, using an applicator, a pressure-sensitive adhesive layer forming liquid is applied onto the release layer of the release

film of the present invention to form a pressure-sensitive adhesive layer, and thereafter the substrate film (A) is pasted onto the pressure-sensitive adhesive layer to produce the film laminate. The coating method with the pressure-sensitive adhesive layer forming liquid is not specifically limited, and can be performed in a conventionally-known mode. As mentioned above, a functional layer can be provided on the side opposite to the face of the substrate film that is in contact with a pressure-sensitive adhesive layer.

As mentioned below, the film laminate of the present invention is favorably used as a release film for pressure-sensitive adhesive layer protection, and in the production method for the release film for pressure-sensitive adhesive layer protection, it is preferable that the substrate film (B) is a multilayer film having a polyester layer containing particles in only the surface layer, the polyester layer adjacent to the release layer contains particles having an average particle size of 1.0 to 4.5 μm, the amount of the particles added is 1 to 10% by mass, and the difference between the longitudinal draw ratio and the lateral draw ratio is 0.2 times or less. The method of this embodiment is advantageous in that the change in the recess-projection profile depending on the film taking position is small.

Further, it is preferable that the longitudinal draw ratio is 3.0 to 4.5 times, and the lateral draw ratio is 3.5 to 5.0 times.

<Use>

The release film for pressure-sensitive adhesive layer protection of the present invention and the film laminate of the present invention are useful as paint protection films (PPF) for use for protecting automobile coating. These are also useful as wrapping films for use for wrapping automobiles, tracks, trains or airplanes with a printed adhesive film. Using the release film for pressure-sensitive adhesive layer protection of the present invention and the film laminate of the present invention, a large-area adhesive film as mentioned above can be easily and uniformly pasted onto adherends.

## Examples

Hereinunder the present invention is described in more detail by Examples, but not overstepping the spirit and the scope thereof, the present invention is not limited to the following Examples. The measurement methods and the evaluation methods employed in the present invention are as follows.

(1) Measurement method for intrinsic viscosity of polyester

One gram of a polyester was accurately weighed, and dissolved in 100 ml of a mixed solvent of phenol/tetrachloroethane = 50/50 (by mass) added thereto, and measured at 30°C.

(2) Measurement method for average particle size ($d_{50}$: μm)

The value of 50% integrated (mass basis) in the equivalent spherical distribution measured using a centrifugal precipitation granular distribution measurement apparatus (SA-CP3 Model by Shimadzu Corporation) was referred to as an average particle size.

(3) Measurement method for number-average molecular weight

GPC (HLC-8120GPC by Tosoh Corporation) was used for the measurement. The number-average molecular weight was calculated as a polystyrene-equivalent one.

(4) Elastic modulus of pressure-sensitive adhesive layer

Using a nanoindenter (TI 950 TriboIndenter) by Hysitron Corporation, the elastic modulus at a point of an indentation depth of 50 nm was measured at room temperature (25°C).

(5) Measurement of distribution curve on the surface of release layer and measurement of the number of projections having a projection height of 0.98 μm

Using a surface profile measurement system ("VertScan" (registered trademark) R5500 by Hitachi High Tech-Science Corporation), the recess-projection profile on the surface in a region of 237.65 μm × 178.25 μm of a release film (sample) was measured in optical interferometry, and the relationship between the projection height every 0.1 μm and the number of the projections at each projection height was shown graphically to be represented as a distribution curve. The number of the projections having a projection height X1 μm and the number of the projections having a

projection height X2 μm were represented by $Y1/mm^2$ and $Y2/mm^2$, respectively. The projection height X1 and X2 are 0.98 μm and 1.98 μm, respectively.

(6) Birefringence ($\Delta n \times 10^3$)

Using a microwave-system molecular orientation meter (Model: MOA-6015) by Oji Scientific Instruments Co., Ltd.), the birefringence ($\Delta n \times 10^3$) was measured.

(7) Air escape index

A release film (sample) was cut into a size of 70 × 70 mm square, and the release film was laminated with a polyester film with a hole having a diameter 5 mm at the center in such a manner that the release layer surface of the release film was kept in contact with the polyester film, and the air escape index was measured.

Using a Digi-Bekk smoothness tester (DB-2, by Toyo Seiki Seisaku-sho, Ltd.), the air escape index was measured in an atmosphere at a temperature 23°C and a humidity 50% RH. At that time, the pressure in the pressure unit was 100 kPa, and a small-size vacuum container having a volume of 38 ml was used. The time for which 1 mL of air flows, that is, the time (second) for which the pressure inside the container changed from 50.7 kPa to 48.0 kPa was measured, and ten times the number of seconds measured was taken as the air escape index.

A smaller value of the air escape index indicates that air escaped rapidly through voids and the sample film has a profile in which air escapes well.

(8) Surface roughness (arithmetical mean height; Sa) of pressure-sensitive adhesive layer after peeled from release film

A pressure-sensitive adhesive layer composed of the following pressure-sensitive adhesive layer composition was formed on the surface of the release layer of the sample film to a thickness (after drying) of 20 μm, by coating and drying. Next, a 75 μm PET film was pasted onto the exposed surface of the pressure-sensitive adhesive layer. Subsequently, the release film was peeled from the surface of the pressure-sensitive adhesive layer, and the arithmetical mean height (Sa) of the surface of the pressure-sensitive adhesive layer was measured using a surface profile measuring system ("VertScan" (registered trademark) by Hitachi High Tech-Science Corporation).

The elastic modulus at 25°C of the pressure-sensitive adhesive layer was 20 MPa.

<<Pressure-Sensitive Adhesive Composition>>

| | |
|---|---|
| Base compound (acrylic resin): AT352 (by Saiden Chemical Industry Co., Ltd.) | 100 parts by mass |
| Crosslinking agent: AL (by Saiden Chemical Industry Co., Ltd.) | 0.25 parts by mass |
| Additive: X-301-375SK (by Saiden Chemical Industry Co., Ltd.) | 0.25 parts by mass |
| Additive: X-301-352S (by Saiden Chemical Industry Co., Ltd.) | 0.25 parts by mass |
| Solvent: toluene: | 40 parts by mass |

(9) Glossiness (60 degrees)

Using VG-2000 by Nippon Denshoku Industries Co., Ltd., the 60-degree glossiness of the surface of the cured resin layer of the laminate film was measured.

(10) Risk of detachment of particles from the surface of release film

The risk of detachment of particles from the surface of the release film was determined. (Criteria)

A: Since the inclination of the distribution curve of the roughness is 1.0 or more, the risk of detachment of particles from the surface of the film is small, and is at an unproblematic level.
B: Since the inclination of the distribution curve of the roughness is less than 1.0, the risk of detachment of particles from the surface of the film is great, and is at a level of lowered handleability.

Examples and Comparative Examples are shown below, and the production method for the polyesters used in Examples and Comparative Examples are as follows.

<Production Method for Polyester (A)>

100 parts by mass of dimethyl terephthalate and 55 parts by mass of ethylene glycol as starting materials and 0.04 parts by mass of magnesium acetate tetrahydrate as a catalyst were put into a reactor. The temperature at the start of the reaction was set at 150°C and the reaction temperature was gradually elevated along with evaporation of methanol, and after 3 hours, the temperature reached 230°C. After 4 hours, the interesterification was substantially finished. 0.02 parts by mass of ethyl acid phosphate was added to the reaction mixture, then 0.04 parts by mass of antimony trioxide was added and the polycondensation was performed for 4 hours. Namely, the temperature was gradually elevated from 230°C up to 280°C. On the other hand, the pressure was gradually lowered from normal pressure to be finally 0.3 mmHg. After the start of the reaction, the stirring power in the reactor tank changed, and the reaction was stopped at the time corresponding to the intrinsic viscosity of 0.65, followed by polymer discharge under nitrogen pressure to give a polyester (A) having an intrinsic viscosity of 0.65.

<Production Method for Polyester (B)>

Silica particles having an average primary particle size of 4.1 μm were added to the polyester (A) not substantially containing particles, in an amount of 3.5% by mass, and kneaded using a vented twin-screw kneader to give a polyester (B).

<Production Method for Polyester (C)>

Silica particles having an average primary particle size of 2.4 μm were added to the polyester (A) not substantially containing particles, in an amount of 0.3% by mass, and kneaded using a vented twin-screw kneader to give a polyester (C).

Example 1

A mixed material was prepared by mixing the polyesters (A) and (B) in a ratio of 73% by mass and 27% by mass, respectively, and fed into a vented twin-screw extruder, melted at 285°C therein, extruded out through a nozzle, and cooled and solidified on a chill roll whose surface temperature was set at 22°C according to a static electricity applying adhesion method, thereby giving an unstretched sheet. Subsequently, utilizing a roll peripheral speed difference at a film temperature of 86°C, the film was stretched by 3.5 times in the longitudinal direction, then led to a tenter, and stretched by 3.6 times at 120°C in the lateral direction, thereafter heat-treated at a main crystallization zone temperature of 230°C, and then relaxed by 3% in the lateral direction to give a biaxially-stretched polyester film roll having a thickness of 75 μm.

Further, the following release layer composition was applied to the film to be in a thickness (after dried) of 0.1 $g/m^2$, and then dried at 120°C for 30 seconds to give a release film roll. The properties of the release film are shown in the following Table 1.

<Release Layer Composition>

Curable silicone resin (silicone resin with a vinyl group introduced into the side chain and/or the terminal of the main chain having a siloxane bond, number-average molecular weight: 10600, viscosity: 1.7 mcps, methyl group/vinyl group = 98.911.1 (mol%)): 91% by mass
Crosslinking agent (CL750: by Momentive Performance Materials Corporation): 3% by mass
Addition-type platinum catalyst (CM678: by Momentive Performance Materials Corporation): 6% by mass

The above release layer composition was diluted with n-heptane so as to control the solid concentration thereof to be 5.4% by mass.

The composition of the curable silicone resin was analyzed by 400 MHz-NMR (Bruker Avance 400M).

For $^1H$-NMR measurement, $CDCl_3$ was used as the solvent, and the peak derived from the methyl group of dimethylsiloxane was taken as the chemical shift standard. The temperature was 30°C.

Examples 2 to 4 and Comparative Example 1

Release film rolls were produced in the same manner as in Example 1, except that the polyester film composition

was changed to the composition shown in Table 1, and the stretching temperature, the draw ratio, the thermal fixation temperature and the relaxation ratio were changed as in Table 1. The properties of these films are shown in the following Table 1.

Example 5

A mixed material was prepared by mixing the polyesters (A) and (B) in a ratio of 70% by mass and 30% by mass, respectively, and fed into a vented twin-screw extruder, melted at 285°C therein, extruded out through a nozzle, and cooled and solidified on a chill roll whose surface temperature was set at 22°C according to a static electricity applying adhesion method, thereby giving an unstretched sheet. Subsequently, utilizing a roll peripheral speed difference at a film temperature of 88°C, the film was stretched by 3.4 times in the longitudinal direction, then the following release layer composition was applied thereto to be in a coating thickness (after dried) of 0.07 μm, and thereafter this was led to a tenter, and stretched by 4.2 times at 115°C in the lateral direction, then heat-treated at a main crystallization zone temperature of 245°C, and relaxed by 2% in the lateral direction to give a release film roll having a thickness of 75 μm. The properties of the film are shown in the following Table 1.

(Release Layer Composition)

Base compound: vinyl group-containing polydimethylsiloxane (vinyl group content 0.16 mmol/g)
Crosslinking agent: hydrogen group-containing polydimethylsiloxane (Si-H group content 6.6 mmol/g) ($Si-CH_3$ group/Si-H group = 100/29)
Catalyst: complex of chloroplatinic acid and vinylsiloxane
Base compound/crosslinking agent = 95.2/4.8 (by mass)
Catalyst addition amount: 100 ppm (relative to silicone (base compound + crosslinking agent))

Comparative Example 2

A release film roll having a thickness of 75 μm was produced in the same manner as in Example 5, except that the release layer composition and the film forming condition were changed as in Table 1.

(Release Layer Composition)

A: Polyether group-containing silicone

Polyether group-containing silicone having a number-average molecular weight of 7000 and containing, in the side chain of dimethyl silicone, a polyethylene glycol having 8 ethylene glycol chains (having a hydroxy group at the terminal) in a ratio by mol of 1 relative to 100 of dimethylsiloxane (when the siloxane bond of the silicone is 1, the ether bond of the polyether group is 0.07 in a ratio by mol). The low-molecular component having a number-average molecular weight of 500 or less is 3%, and the compound does not have a vinyl group bonding to silicon (vinylsilane) and a hydrogen group (hydrogensilane). For release layer formation, the compound was blended with sodium dodecylbenzenesulfonate in a ratio of 0.25 by mass relative to 1 of the polyether group-containing silicone, and dispersed in water, and the resultant aqueous dispersion was used for the release layer formation.

B: Melamine compound: hexamethoxymethylolmelamine

C: Polyester resin

An aqueous dispersion of a polyester resin having the following composition.
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (by mol)

$$A/B/C = 20/30/50 \text{ (by mass)}$$

The properties of the film are shown in the following Table 1.

Table 1

| Item | | Unit | Example 1 | Example 2 | Example 3 | Example 4 | Example 5 | Comparative Example 1 | Comparative Example 2 |
|---|---|---|---|---|---|---|---|---|---|
| Polyester Material | Polyester A | mass % | 73 | 32 | 87 | 80 | 70 | 94 | 70 |
| | Polyester B | | 27 | 68 | 13 | 20 | 30 | - | 30 |
| | Polyester C | | 0 | 0 | 0 | 0 | 0 | 6 | 0 |
| | Average Particle Size | μm | 4.1 | 4.1 | 4.1 | 4.1 | 4.1 | 2.4 | 4.1 |
| | Amount Added | mass % | 1.0 | 2.4 | 0.5 | 0.7 | 1.1 | 0.018 | 1.1 |
| | Particles Species | - | silica | silica | silica | silica | silica | silica | silica |
| Longitudinal Stretching Temperature | | °C | 86 | 81 | 81 | 81 | 88 | 90 | 86 |
| Longitudinal Draw ratio | | - | 3.5 | 3.8 | 3.8 | 3.8 | 3.4 | 3.4 | 3.5 |
| Lateral Stretching Temperature | | °C | 120 | 120 | 115 | 115 | 115 | 140 | 120 |
| Lateral Draw ratio | | - | 3.6 | 4 | 4.2 | 4.2 | 4.2 | 4.4 | 3.6 |
| Thermal Fixation Temperature | | °C | 230 | 237 | 234 | 234 | 245 | 224 | 230 |
| Relax Ratio | | % | 3 | 4 | 3 | 3 | 2 | 10 | 3 |
| Film Thickness | | μm | 75 | 26 | 26 | 26 | 75 | 75 | 75 |
| Film Birefringence ($\Delta n \times 10^3$) | | - | 4.4 | 0.7 | 21 | 2 | 2 | 48 | 1.3 |
| MOR | | - | 1.0 | 1.1 | 1.2 | 1.2 | 1.3 | 2.5 | 1.0 |
| Release Layer Tchickness | | μm | 0.1 | 0.1 | 0.1 | 0.1 | 0.07 | 0.1 | 0.05 |

(continued)

| Item | | Unit | Example 1 | Example 2 | Example 3 | Example 4 | Example 5 | Comparative Example 1 | Comparative Example 2 |
|---|---|---|---|---|---|---|---|---|---|
| Release Layer Surface Roughness | Sa | nm | 289 | 420 | 207 | 320 | 474 | 59 | 458 |
| | Sp | nm | 402 | 619 | 308 | 496 | 745 | 87 | 713 |
| | the number of projections (Y1) on the release layer surface when the height of the projections is (X1 = 0.98) μm | number/$mm^2$ | 3.5 | 3.7 | 3.4 | 3.4 | 3.4 | 1.6 | 3.4 |
| | the number of projections (Y2) on the release layer surface when the height of the projections is (X2 = 1.98) μm | number/$mm^2$ | 0.6 | 2.0 | 1.5 | 2.3 | 2.3 | 0.0 | 2.5 |
| | -(logY2-LogY1)/(X2-X1) | - | 2.9 | 1.7 | 1.9 | 1.1 | 1.1 | - | 0.9 |
| Pressure-Sensitive Adhesive Layer Surface Roughness after peeling | Sa | nm | 282 | 383 | 205 | 306 | 401 | 53 | 409 |
| Air Escape Index | | Second | 486 | 417 | 1337 | 367 | 439 | 37258 | 439 |
| Glossiness (60 degrees) | | - | 44 | 24 | 72 | 43 | 21 | 150 | 19 |
| Risk of Detachment of Particles | | - | A | A | A | A | A | A | B |

As in Example 1 to Example 5, it is known that the release film of the present invention draws a distribution curve of an appropriately roughened surface roughness, and therefore when it is pasted to and then peeled from a pressure-sensitive adhesive layer, the profile of the release layer surface is transferred onto the surface of the pressure-sensitive adhesive layer, and since the numerical value of the air escape index is small, the time necessary for air escape from the pressure-sensitive adhesive layer is short and air can be smoothly escaped. When viewed from the standpoint of the transfer rate of the surface profile of the release layer to the surface of the pressure-sensitive adhesive layer, in all of Example 1 to Example 5, the ratio of Sa of the pressure-sensitive adhesive layer surface/Sa of the release layer surface is 0.9 or more, and it is known that in these, the surface profile of the release layer can be reproduced accurately.

Further, since the birefringence of the substrate film constituting the release film is small, it is presumed that when the release film with a pressure-sensitive adhesive layer is cut into sheets, its cutting performance is good.

On the other hand, the film of Comparative Example 1 is a general-type release film, and the recess-projection transfer from the film to the surface of a pressure-sensitive adhesive layer is insufficient. In addition, the air escape index value of the film is large, and it is suggested that when a sheet having pressure-sensitive adhesive layer is pasted to an adherend, bubbles will be difficult to escape.

In Comparative Example 2, the inclination of the roughness distribution curve oversteps the range of the present invention, and therefore the risk of detachment of particles from the release film surface is great, and the handleability of the film tends to lower.

Fig. 1 to Fig. 3 each are a bird's dye view showing of the surface of a release layer ("release face") of the release film (sample film) obtained in Examples 1 to 3. From these views, the roughness of the release layer surface of the release film of the present invention is visually recognized, and it is obvious that the release layer surface of the release film of the present invention differs from the release layer surface ("release face") of the release film (sample film) in Comparative Example 1.

Also from Fig. 5 to Fig. 7, it is known that the pressure-sensitive adhesive layer surface accurately reproduces the surface profile of the release layer.

Industrial Applicability

The release film of the present invention leaves substantially no moisture or residual bubbles when pasted on an adherend with water, and can provide a release film and a film laminate which can be easily cut into single sheets, and the industrial value thereof is significant. Above all, in particular, the release film of the present invention is favorable for automobile painting protective films or wrapping films.

## Claims

1. A release film for pressure-sensitive adhesive layer protection comprising a release layer on one surface of a substrate film (B), wherein the surface roughness (arithmetical mean height; Sa) of the surface of the release layer is 200 nm or more, the maximum peak height (Sp) of the surface of the release layer is 300 nm or more, and the distribution curve representing the relationship between the projection height (X) and the number of projections (Y) on the surface of the release layer satisfies the following expression (1):

$$-(\log Y2-\log Y1)/(X2-X1) \geq 1.0 \qquad (1)$$

   wherein Y1 and Y2 each represent the number of projections (number/$mm^2$) on the surface of the release layer when X1 and X2, the heights of the projections on the surface of the release layer, are X1 = 0.98 $\mu$m and X2 = 1.98 $\mu$m, respectively.

2. The release film for pressure-sensitive adhesive layer protection according to claim 1, wherein the substrate film (B) contains particles having an average particle size of 1 to 10 $\mu$m in an amount of 0.1 to 10% by mass.

3. The release film for pressure-sensitive adhesive layer protection according to claim 1, wherein the substrate film (B) has a multilayer structure, and the surface layer of the substrate film (B) on the side kept in contact with the release layer contains the particles having an average particle size of 1 to 10 $\mu$m in an amount of 0.1 to 10% by mass.

4. The release film for pressure-sensitive adhesive layer protection according to any one of claims 1 to 3, wherein the number of the projections having a projection height of 0.98 $\mu$m represented by X1 is 1000/$mm^2$ or more.

5. The release film for pressure-sensitive adhesive layer protection according to any one of claims 1 to 4, wherein the number of the projections having a projection height of 1.98 μm represented by X2 is $3/mm^2$ or more.

6. The release film for pressure-sensitive adhesive layer protection according to any one of claims 1 to 5, wherein the release layer contains a curable silicone resin.

7. The release film for pressure-sensitive adhesive layer protection according to claim 6, wherein the release layer further contains a surfactant.

8. The release film for pressure-sensitive adhesive layer protection according to one of claims 1 to 7, wherein the substrate film (B) is a polyester film.

9. The release film for pressure-sensitive adhesive layer protection according to claim 8, wherein the birefringence ($\Delta n \times 10^3$) of the polyester film is 25 or less.

10. The release film for pressure-sensitive adhesive layer protection according to claim 8 or 9, wherein the MOR value of the polyester film is 1.5 or less.

11. The release film for pressure-sensitive adhesive layer protection according to any one of claims 1 to 10, having an air escape index of 2000 seconds or less.

12. The release film for pressure-sensitive adhesive layer protection according to any one of claims 8 to 11, wherein the polyester film contains a recycled material in an amount of 50% by mass or more.

13. A film laminate comprising, via a pressure-sensitive adhesive layer therebetween, a substrate film (A) on the release layer of the release film of any one of claims 1 to 12.

14. The film laminate according to claim 13, wherein the substrate film (A) is a polyurethane film.

15. The film laminate according to claim 13, wherein the substrate film (A) is a print layer-having resin film.

16. The film laminate according to any one of claims 13 to 15, wherein the pressure-sensitive adhesive layer is any of an acrylic pressure-sensitive adhesive layer, an urethane-based pressure-sensitive adhesive layer or a silicone-based pressure-sensitive adhesive layer.

17. The film laminate according to any one of claims 13 to 16, wherein the surface roughness (arithmetical mean height; Sa) of the surface of the pressure-sensitive adhesive layer after peeling the release film is 200 nm or more.

18. The film laminate according to any one of claims 13 to 17, wherein the elastic modulus at 25°C of the pressure-sensitive adhesive layer is 20 MPa or more.

19. A method for producing the release film for pressure-sensitive adhesive layer protection of any one of claims 1 to 12, wherein the substrate film (B) is a multilayer film having a polyester layer containing particles in only the surface layer, the polyester layer adjacent to the release layer contains particles having an average particle size of 1.0 to 4.5 μm, the amount of the particles added is 1 to 10% by mass, and the difference between the longitudinal draw ratio and the lateral draw ratio is 0.2 times or less.

20. The method for producing the release film for pressure-sensitive adhesive layer protection according to claim 19, wherein the longitudinal draw ratio is 3.0 to 4.5 times, and the lateral draw ratio is 3.5 to 5.0 times.

21. The film laminate according to any one of claims 13 to 18, which is in the form of a sheet having at least one side of 1000 mm or more.

22. The release film for pressure-sensitive adhesive layer protection according to any one of claims 1 to 12, which is for automobile coating protection or wrapping film.

23. The film laminate according to any one of claims 13 to 18 and 21, which is for automobile coating protection or wrapping film.

Fig.1

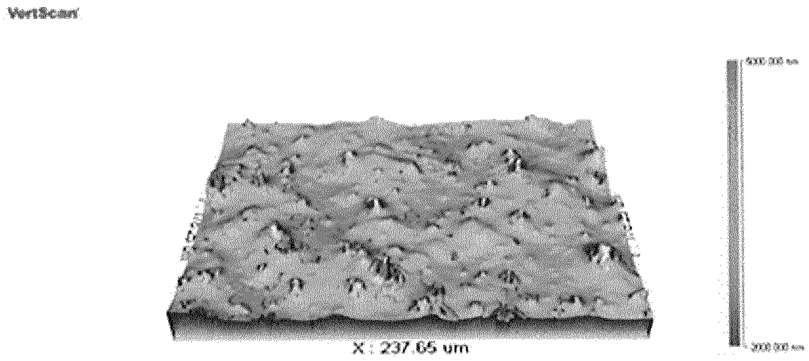


Fig.2

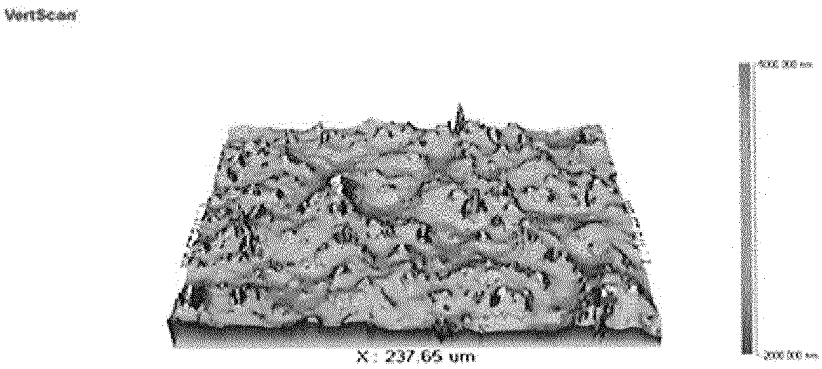


Fig.3

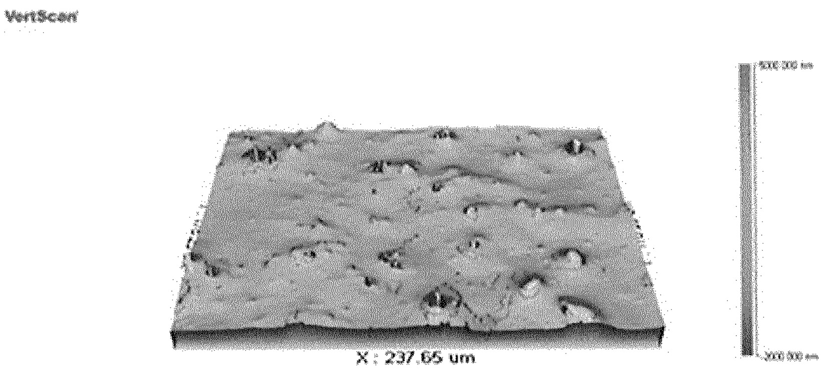

Fig.4

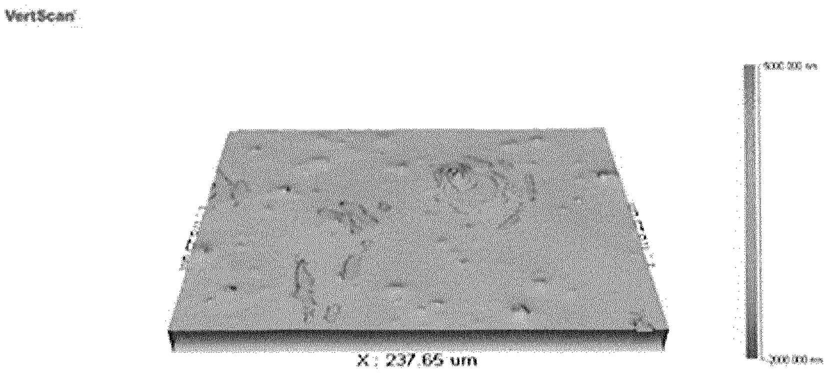


Fig.5

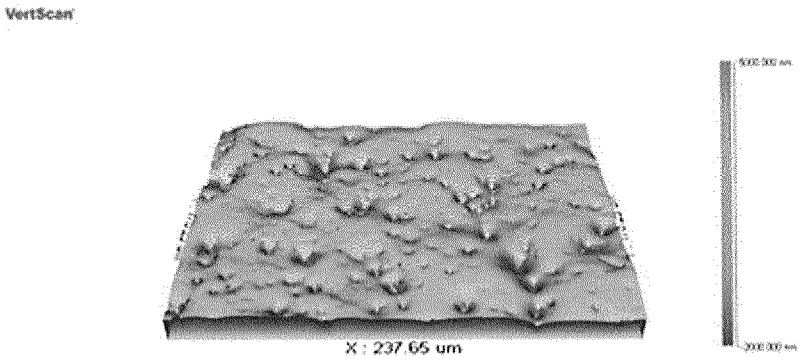


Fig.6

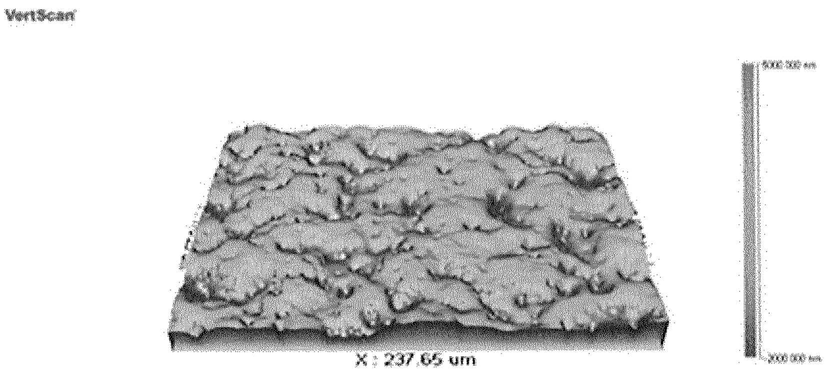

Fig.7

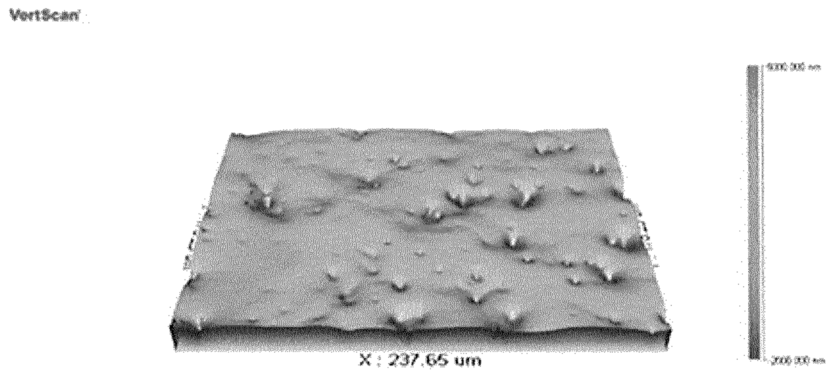


Fig.8

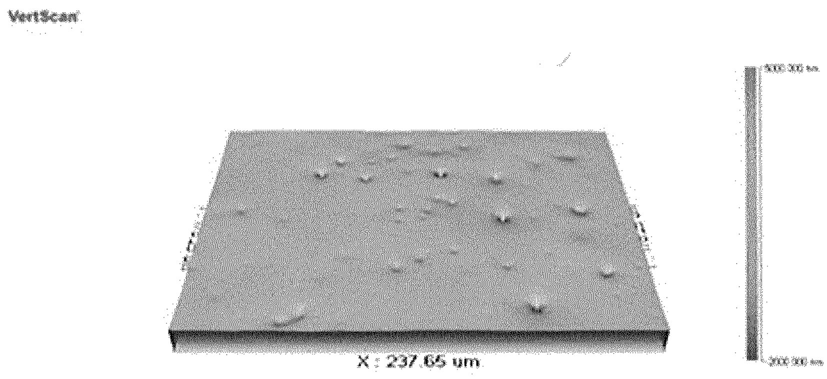

## INTERNATIONAL SEARCH REPORT

International application No. **PCT/JP2022/014096**

**A. CLASSIFICATION OF SUBJECT MATTER**

***B32B 27/00***(2006.01)i; ***C09D 183/04***(2006.01)i; ***C09J 7/38***(2018.01)i; ***C09J 7/40***(2018.01)i
FI: B32B27/00 B; B32B27/00 L; C09D183/04; C09J7/40; C09J7/38

According to International Patent Classification (IPC) or to both national classification and IPC

**B. FIELDS SEARCHED**

Minimum documentation searched (classification system followed by classification symbols)

B32B27/00; C09D183/04; C09J7/38; C09J7/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-155950 A (DIC CORP.) 01 September 2016 (2016-09-01) claims, paragraphs [0013], [0038], [0050], [0051], [0068], [0106], [0107], [0111], [0165]-[0167], [0214]-[0216], fig. 1, 6 | 1-23 |
| Y | JP 2017-177426 A (MITSUBISHI CHEMICAL CORP.) 05 October 2017 (2017-10-05) claims | 1-23 |
| Y | US 2008/0193696 A1 (HAYES, JAMES T.) 14 August 2008 (2008-08-14) claims | 1-23 |
| Y | WO 2012/085204 A1 (NITTO EUROPE) 28 June 2012 (2012-06-28) example 1, claims | 1-23 |
| Y | JP 2001-30427 A (TEIJIN LTD.) 06 February 2001 (2001-02-06) claims, paragraphs [0016], [0017], [0020] | 1-23 |
| A | JP 2019-94440 A (LINTEC CORP.) 20 June 2019 (2019-06-20) | 1-23 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/014096

C. DOCUMENTS CONSIDERED TO BE RELEVANT

| Category* | Citation of document, with indication, where appropriate, of the relevant passages | Relevant to claim No. |
|---|---|---|
| A | JP 2019-133049 A (NITTO DENKO CORP.) 08 August 2019 (2019-08-08) | 1-23 |
| A | JP 2017-222177 A (MITSUBISHI CHEMICAL CORP.) 21 December 2017 (2017-12-21) | 1-23 |
| A | JP 2019-126999 A (MITSUBISHI CHEMICAL CORP.) 01 August 2019 (2019-08-01) | 1-23 |
| A | WO 2019/168008 A1 (MITSUBISHI CHEMICAL CORP.) 06 September 2019 (2019-09-06) | 1-23 |
| A | WO 2017/195899 A1 (SOMAR CORP.) 16 November 2017 (2017-11-16) | 1-23 |

Form PCT/ISA/210 (second sheet) (January 2015)

**INTERNATIONAL SEARCH REPORT**
**Information on patent family members**

International application No.
**PCT/JP2022/014096**

| Patent document cited in search report | Publication date (day/month/year) | Patent family member(s) | Publication date (day/month/year) |
|---|---|---|---|
| JP 2016-155950 A | 01 September 2016 | (Family: none) | |
| JP 2017-177426 A | 05 October 2017 | (Family: none) | |
| US 2008/0193696 A1 | 14 August 2008 | WO 2007/016068 A1 claims<br>EP 1910491 A1<br>CN 101233204 A<br>KR 10-2008-0041667 A | |
| WO 2012/085204 A1 | 28 June 2012 | (Family: none) | |
| JP 2001-30427 A | 06 February 2001 | (Family: none) | |
| JP 2019-94440 A | 20 June 2019 | (Family: none) | |
| JP 2019-133049 A | 08 August 2019 | CN 110109211 A<br>KR 10-2019-0093509 A | |
| JP 2017-222177 A | 21 December 2017 | (Family: none) | |
| JP 2019-126999 A | 01 August 2019 | (Family: none) | |
| WO 2019/168008 A1 | 06 September 2019 | CN 111699092 A<br>KR 10-2020-0125611 A | |
| WO 2017/195899 A1 | 16 November 2017 | CN 109072022 A<br>KR 10-2019-0008283 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006070273 A
- WO 2015152352 A
- JP 7089468 A
- JP 2019210446 A